# EUROPEAN PATENT APPLICATION

(11) **EP 4 650 958 A1**
(43) Date of publication of application: **19.11.2025**
(21) Application number: 25170579.4
(22) Date of filing: 15.04.2025
(51) Int. Cl.: G06F 9/451

(54) **TECHNIQUES FOR SECURELY USING AN EXTENSION OF AN APPLICATION**

(30) Priority: 13.05.2024 US 202463646294 P; 13.11.2024 US 202418945962
(71) Applicant: Apple Inc., Cupertino, CA 95014 (US)
(72) Inventor: COTUGNO, Adam M., Cupertino, 95014 (US); ARAN, Can, Cupertino, 95014 (US); HEILPERN, Mark A., Cupertino, 95014 (US); DESAI, Neil N., Cupertino, 95014 (US)
(74) Representative: Zacco Denmark A/S

(57) **Abstract**

The present disclosure generally relates to managing content. Some techniques are for enforcing use of a hardware component in accordance with some embodiments. Other techniques are for managing memory for an extension in accordance with some embodiments. Other techniques are for obtaining a memory location provided to an extension in accordance with some embodiments.

## Description

### CROSS-REFERENCE TO RELATED APPLICATIONS

This application claims priority to U.S. Provisional Patent Application Serial No. 63/646,294, entitled "TECHNIQUES FOR SECURELY USING AN EXTENSION OF AN APPLICATION" filed May 13, 2024, which is hereby incorporated by reference in its entirety for all purposes.

### BACKGROUND

Electronic devices are becoming increasingly complex. For example, applications often use extensions to perform operations. Ensuring such extensions are secure is becoming more complex. Accordingly, there is a need to improve techniques for managing content.

### SUMMARY

Current techniques for managing content are generally ineffective and/or inefficient. For example, some techniques require extensions of applications to not have access to any long-term memory or have access to long-term memory without any safeguards. This disclosure provides more effective and/or efficient techniques for managing content using examples of an extension of an application. It should be recognized that other types of software can be used with techniques described herein. For example, different applications can use techniques described herein. In addition, techniques optionally complement or replace other techniques for managing content.

In some embodiments, a method that is performed at a system process of a device is described. In some embodiments, the method comprises: detecting a request to use an extension of an application; and after detecting the request to use the extension of the application: in accordance with a determination that a first set of one or more criteria is satisfied, wherein the first set of one or more criteria includes a criterion that is satisfied when the extension of the application does not activate an operating system function within a predefined period of time of the extension being active, terminating the extension of the application; and in accordance with a determination that the first set of one or more criteria is not satisfied, forgoing termination of the extension of the application.

In some embodiments, a non-transitory computer-readable storage medium storing one or more programs configured to be executed by one or more processors of a device executing a system process is described. In some embodiments, the one or more programs includes instructions for: detecting a request to use an extension of an application; and after detecting the request to use the extension of the application: in accordance with a determination that a first set of one or more criteria is satisfied, wherein the first set of one or more criteria includes a criterion that is satisfied when the extension of the application does not activate an operating system function within a predefined period of time of the extension being active, terminating the extension of the application; and in accordance with a determination that the first set of one or more criteria is not satisfied, forgoing termination of the extension of the application.

In some embodiments, a transitory computer-readable storage medium storing one or more programs configured to be executed by one or more processors of a device executing a system process is described. In some embodiments, the one or more programs includes instructions for: detecting a request to use an extension of an application; and after detecting the request to use the extension of the application: in accordance with a determination that a first set of one or more criteria is satisfied, wherein the first set of one or more criteria includes a criterion that is satisfied when the extension of the application does not activate an operating system function within a predefined period of time of the extension being active, terminating the extension of the application; and in accordance with a determination that the first set of one or more criteria is not satisfied, forgoing termination of the extension of the application.

In some embodiments, a device executing a system process is described. In some embodiments, the device comprises one or more processors and memory storing one or more programs configured to be executed by the one or more processors. In some embodiments, the one or more programs includes instructions for: detecting a request to use an extension of an application; and after detecting the request to use the extension of the application: in accordance with a determination that a first set of one or more criteria is satisfied, wherein the first set of one or more criteria includes a criterion that is satisfied when the extension of the application does not activate an operating system function within a predefined period of time of the extension being active, terminating the extension of the application; and in accordance with a determination that the first set of one or more criteria is not satisfied, forgoing termination of the extension of the application.

In some embodiments a device executing a system process is described. In some embodiments, the device comprises means for performing each of the following steps: detecting a request to use an extension of an application; and after detecting the request to use the extension of the application: in accordance with a determination that a first set of one or more criteria is satisfied, wherein the first set of one or more criteria includes a criterion that is satisfied when the extension of the application does not activate an operating system function within a predefined period of time of the extension being active, terminating the extension of the application; and in accordance with a determination that the first set of one or more criteria is not satisfied, forgoing termination of the extension of the application.

In some embodiments, a computer program product is described. In some embodiments, the computer program product comprises one or more programs configured to be executed by one or more processors of a device executing a system process. In some embodiments, the one or more programs include instructions for: detecting a request to use an extension of an application; and after detecting the request to use the extension of the application: in accordance with a determination that a first set of one or more criteria is satisfied, wherein the first set of one or more criteria includes a criterion that is satisfied when the extension of the application does not activate an operating system function within a predefined period of time of the extension being active, terminating the extension of the application; and in accordance with a determination that the first set of one or more criteria is not satisfied, forgoing termination of the extension of the application.

In some embodiments, a method that is performed at a system process of a device is described. In some embodiments, the method comprises: detecting a first request to use an extension of an application; in response to detecting the first request, sending a first path to the extension of the application; after sending the first path, detecting a second request, different from the first request, to use the extension of the application; and in response to detecting the second request, sending a second path, different from the first path, to the extension of the application.

In some embodiments, a non-transitory computer-readable storage medium storing one or more programs configured to be executed by one or more processors of a device executing a system process is described. In some embodiments, the one or more programs includes instructions for: detecting a first request to use an extension of an application; in response to detecting the first request, sending a first path to the extension of the application; after sending the first path, detecting a second request, different from the first request, to use the extension of the application; and in response to detecting the second request, sending a second path, different from the first path, to the extension of the application.

In some embodiments, a transitory computer-readable storage medium storing one or more programs configured to be executed by one or more processors of a device executing a system process is described. In some embodiments, the one or more programs includes instructions for: detecting a first request to use an extension of an application; in response to detecting the first request, sending a first path to the extension of the application; after sending the first path, detecting a second request, different from the first request, to use the extension of the application; and in response to detecting the second request, sending a second path, different from the first path, to the extension of the application.

In some embodiments, a device executing a system process is described. In some embodiments, the device comprises one or more processors and memory storing one or more programs configured to be executed by the one or more processors. In some embodiments, the one or more programs includes instructions for: detecting a first request to use an extension of an application; in response to detecting the first request, sending a first path to the extension of the application; after sending the first path, detecting a second request, different from the first request, to use the extension of the application; and in response to detecting the second request, sending a second path, different from the first path, to the extension of the application.

In some embodiments, a device executing a system process is described. In some embodiments, the device comprises means for performing each of the following steps: detecting a first request to use an extension of an application; in response to detecting the first request, sending a first path to the extension of the application; after sending the first path, detecting a second request, different from the first request, to use the extension of the application; and in response to detecting the second request, sending a second path, different from the first path, to the extension of the application.

In some embodiments, a computer program product is described. In some embodiments, the computer program product comprises one or more programs configured to be executed by one or more processors of a device executing a system process. In some embodiments, the one or more programs include instructions for: detecting a first request to use an extension of an application; in response to detecting the first request, sending a first path to the extension of the application; after sending the first path, detecting a second request, different from the first request, to use the extension of the application; and in response to detecting the second request, sending a second path, different from the first path, to the extension of the application.

In some embodiments, a method that is performed at an application of a device is described. In some embodiments, the method comprises: while the application is active, sending, to a system process, a request for one or more paths previously provided to an extension of the application; after sending the request for one or more paths previously provided to the extension of the application, receiving, from the system process, a first set of one or more paths previously provided to the extension of the application; and after receiving the first set of one or more paths previously provided to the extension of the application, obtaining first content at a first path of the first set of one or more paths.

In some embodiments, a non-transitory computer-readable storage medium storing one or more programs configured to be executed by one or more processors of a device executing an application is described. In some embodiments, the one or more programs includes instructions for: while the application is active, sending, to a system process, a request for one or more paths previously provided to an extension of the application; after sending the request for one or more paths previously provided to the extension of the application, receiving, from the system process, a first set of one or more paths previously provided to the extension of the application; and after receiving the first set of one or more paths previously provided to the extension of the application, obtaining first content at a first path of the first set of one or more paths.

In some embodiments, a transitory computer-readable storage medium storing one or more programs configured to be executed by one or more processors of a device executing an application is described. In some embodiments, the one or more programs includes instructions for: while the application is active, sending, to a system process, a request for one or more paths previously provided to an extension of the application; after sending the request for one or more paths previously provided to the extension of the application, receiving, from the system process, a first set of one or more paths previously provided to the extension of the application; and after receiving the first set of one or more paths previously provided to the extension of the application, obtaining first content at a first path of the first set of one or more paths.

In some embodiments, a device executing an application is described. In some embodiments, the device comprises one or more processors and memory storing one or more programs configured to be executed by the one or more processors. In some embodiments, the one or more programs includes instructions for: while the application is active, sending, to a system process, a request for one or more paths previously provided to an extension of the application; after sending the request for one or more paths previously provided to the extension of the application, receiving, from the system process, a first set of one or more paths previously provided to the extension of the application; and after receiving the first set of one or more paths previously provided to the extension of the application, obtaining first content at a first path of the first set of one or more paths.

In some embodiments, a device executing an application is described. In some embodiments, the device comprises means for performing each of the following steps: while the application is active, sending, to a system process, a request for one or more paths previously provided to an extension of the application; after sending the request for one or more paths previously provided to the extension of the application, receiving, from the system process, a first set of one or more paths previously provided to the extension of the application; and after receiving the first set of one or more paths previously provided to the extension of the application, obtaining first content at a first path of the first set of one or more paths.

In some embodiments, a computer program product is described. In some embodiments, the computer program product comprises one or more programs configured to be executed by one or more processors of a device executing an application. In some embodiments, the one or more programs include instructions for: while the application is active, sending, to a system process, a request for one or more paths previously provided to an extension of the application; after sending the request for one or more paths previously provided to the extension of the application, receiving, from the system process, a first set of one or more paths previously provided to the extension of the application; and after receiving the first set of one or more paths previously provided to the extension of the application, obtaining first content at a first path of the first set of one or more paths.

Executable instructions for performing these functions are, optionally, included in a non-transitory computer-readable storage medium or other computer program product configured for execution by one or more processors. Executable instructions for performing these functions are, optionally, included in a transitory computer-readable storage medium or other computer program product configured for execution by one or more processors.

### DESCRIPTION OF THE FIGURES

For a better understanding of the various described embodiments, reference should be made to the Detailed Description below, in conjunction with the following drawings in which like reference numerals refer to corresponding parts throughout the figures.
FIG. 1A is a block diagram illustrating a compute system in accordance with some embodiments.
FIG. 1B is a flow diagram illustrating a method for an application in accordance with some embodiments.
FIG. 1C is a flow diagram illustrating another method for an application in accordance with some embodiments.
FIG. 1D is a block diagram illustrating a device in accordance with some embodiments.
FIG. 2 is a block diagram illustrating a device with interconnected subsystems in accordance with some embodiments.
FIGS. 3A-3K illustrate exemplary user interfaces for securely using an extension of an application in accordance with some embodiments.
FIG. 4 is a flow diagram illustrating a method for enforcing use of a hardware component in accordance with some embodiments.
FIG. 5 is a flow diagram illustrating a method for managing memory for an extension in accordance with some embodiments.
FIG. 6 is a flow diagram illustrating a method for obtaining a memory location provided to an extension in accordance with some embodiments.

### DETAILED DESCRIPTION

The following description sets forth exemplary methods, parameters, and the like. It should be recognized, however, that such description is not intended as a limitation on the scope of the present disclosure but is instead provided as a description of exemplary embodiments.

Methods described herein can include one or more steps that are contingent upon one or more conditions being satisfied. It should be understood that a method can occur over multiple iterations of the same process with different steps of the method being satisfied in different iterations. For example, if a method requires performing a first step upon a determination that a set of one or more criteria is met and a second step upon a determination that the set of one or more criteria is not met, a person of ordinary skill in the art would appreciate that the steps of the method are repeated until both conditions, in no particular order, are satisfied. Thus, a method described with steps that are contingent upon a condition being satisfied can be rewritten as a method that is repeated until each of the conditions described in the method are satisfied. This, however, is not required of system or computer readable medium claims where the system or computer readable medium claims include instructions for performing one or more steps that are contingent upon one or more conditions being satisfied. Because the instructions for the system or computer readable medium claims are stored in one or more processors and/or at one or more memory locations, the system or computer readable medium claims include logic that can determine whether the one or more conditions have been satisfied without explicitly repeating steps of a method until all of the conditions upon which steps in the method are contingent have been satisfied. A person having ordinary skill in the art would also understand that, similar to a method with contingent steps, a system or computer readable storage medium can repeat the steps of a method as many times as needed to ensure that all of the contingent steps have been performed.

Although the following description uses terms "first," "second," etc. to describe various elements, these elements should not be limited by the terms. In some embodiments, these terms are used to distinguish one element from another. For example, a first subsystem could be termed a second subsystem, and, similarly, a second subsystem device or a subsystem device could be termed a first subsystem device, without departing from the scope of the various described embodiments. In some embodiments, the first subsystem and the second subsystem are two separate references to the same subsystem. In some embodiments, the first subsystem and the second subsystem are both subsystems, but they are not the same subsystem or the same type of subsystem.

The terminology used in the description of the various described embodiments herein is for the purpose of describing particular embodiments only and is not intended to be limiting. As used in the description of the various described embodiments and the appended claims, the singular forms "a,'' "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if" is, optionally, construed to mean "when," "upon," "in response to determining," "in response to detecting," or "in accordance with a determination that" depending on the context. Similarly, the phrase "if it is determined" or "if [a stated condition or event] is detected" is, optionally, construed to mean "upon determining," "in response to determining," "upon detecting [the stated condition or event]," "in response to detecting [the stated condition or event]," or "in accordance with a determination that [the stated condition or event]" depending on the context.

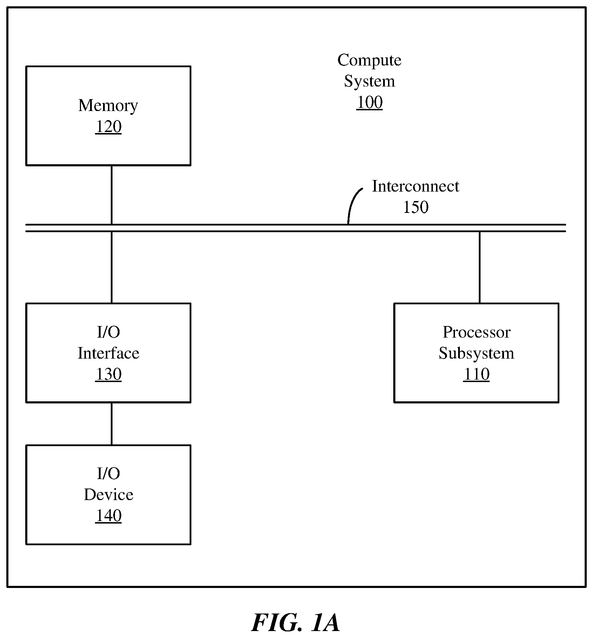

Turning to FIG. 1A, a block diagram of compute system 100 is illustrated. Compute system 100 is a non-limiting example of a compute system that can be used to perform functionality described herein. It should be recognized that other computer architectures of a compute system can be used to perform functionality described herein.

In the illustrated example, compute system 100 includes processor subsystem 110 communicating with (e.g., wired or wirelessly) memory 120 (e.g., a system memory) and I/O interface 130 via interconnect 150 (e.g., a system bus, one or more memory locations, or other communication channel for connecting multiple components of compute system 100). In addition, I/O interface 130 is communicating with (e.g., wired or wirelessly) to I/O device 140. In some embodiments, I/O interface 130 is included with I/O device 140 such that the two are a single component. It should be recognized that there can be one or more I/O interfaces, with each I/O interface communicating with one or more I/O devices. In some embodiments, multiple instances of processor subsystem 110 can be communicating via interconnect 150.

Compute system 100 can be any of various types of devices, including, but not limited to, a system on a chip, a server system, a personal computer system (e.g., a smartphone, a smartwatch, a wearable device, a tablet, a laptop computer, and/or a desktop computer), a sensor, or the like. In some embodiments, compute system 100 is included or communicating with a physical component for the purpose of modifying the physical component in response to an instruction. In some embodiments, compute system 100 receives an instruction to modify a physical component and, in response to the instruction, causes the physical component to be modified. In some embodiments, the physical component is modified via an actuator, an electric signal, and/or algorithm. Examples of such physical components include an acceleration control, a break, a gear box, a hinge, a motor, a pump, a refrigeration system, a spring, a suspension system, a steering control, a pump, a vacuum system, and/or a valve. In some embodiments, a sensor includes one or more hardware components that detect information about a physical environment in proximity to (e.g., surrounding) the sensor. In some embodiments, a hardware component of a sensor includes a sensing component (e.g., an image sensor or temperature sensor), a transmitting component (e.g., a laser or radio transmitter), a receiving component (e.g., a laser or radio receiver), or any combination thereof. Examples of sensors include an angle sensor, a chemical sensor, a brake pressure sensor, a contact sensor, a non-contact sensor, an electrical sensor, a flow sensor, a force sensor, a gas sensor, a humidity sensor, an image sensor (e.g., a camera sensor, a radar sensor, and/or a LiDAR sensor), an inertial measurement unit, a leak sensor, a level sensor, a light detection and ranging system, a metal sensor, a motion sensor, a particle sensor, a photoelectric sensor, a position sensor (e.g., a global positioning system), a precipitation sensor, a pressure sensor, a proximity sensor, a radio detection and ranging system, a radiation sensor, a speed sensor (e.g., measures the speed of an object), a temperature sensor, a time-of-flight sensor, a torque sensor, and an ultrasonic sensor. In some embodiments, a sensor includes a combination of multiple sensors. In some embodiments, sensor data is captured by fusing data from one sensor with data from one or more other sensors. Although a single compute system is shown in FIG. 1A, compute system 100 can also be implemented as two or more compute systems operating together.

In some embodiments, processor subsystem 110 includes one or more processors or processing units configured to execute program instructions to perform functionality described herein. For example, processor subsystem 110 can execute an operating system, a middleware system, one or more applications, or any combination thereof.

In some embodiments, the operating system manages resources of compute system 100. Examples of types of operating systems covered herein include batch operating systems (e.g., Multiple Virtual Storage (MVS)), time-sharing operating systems (e.g., Unix), distributed operating systems (e.g., Advanced Interactive eXecutive (AIX), network operating systems (e.g., Microsoft Windows Server), and real-time operating systems (e.g., QNX). In some embodiments, the operating system includes various procedures, sets of instructions, software components, and/or drivers for controlling and managing general system tasks (e.g., memory management, storage device control, power management, or the like) and for facilitating communication between various hardware and software components. In some embodiments, the operating system uses a priority-based scheduler that assigns a priority to different tasks that processor subsystem 110 can execute. In such examples, the priority assigned to a task is used to identify a next task to execute. In some embodiments, the priority-based scheduler identifies a next task to execute when a previous task finishes executing. In some embodiments, the highest priority task runs to completion unless another higher priority task is made ready.

In some embodiments, the middleware system provides one or more services and/or capabilities to applications (e.g., the one or more applications running on processor subsystem 110) outside of what the operating system offers (e.g., data management, application services, messaging, authentication, API management, or the like). In some embodiments, the middleware system is designed for a heterogeneous computer cluster to provide hardware abstraction, low-level device control, implementation of commonly used functionality, message-passing between processes, package management, or any combination thereof. Examples of middleware systems include Lightweight Communications and Marshalling (LCM), PX4, Robot Operating System (ROS), and ZeroMQ. In some embodiments, the middleware system represents processes and/or operations using a graph architecture, where processing takes place in nodes that can receive, post, and multiplex sensor data messages, control messages, state messages, planning messages, actuator messages, and other messages. In such examples, the graph architecture can define an application (e.g., an application executing on processor subsystem 110 as described above) such that different operations of the application are included with different nodes in the graph architecture.

In some embodiments, a message sent from a first node in a graph architecture to a second node in the graph architecture is performed using a publish-subscribe model, where the first node publishes data on a channel in which the second node can subscribe. In such examples, the first node can store data in memory (e.g., memory 120 or some local memory of processor subsystem 110) and notify the second node that the data has been stored in the memory. In some embodiments, the first node notifies the second node that the data has been stored in the memory by sending a pointer (e.g., a memory pointer, such as an identification of a memory location) to the second node so that the second node can access the data from where the first node stored the data. In some embodiments, the first node would send the data directly to the second node so that the second node would not need to access a memory based on data received from the first node.

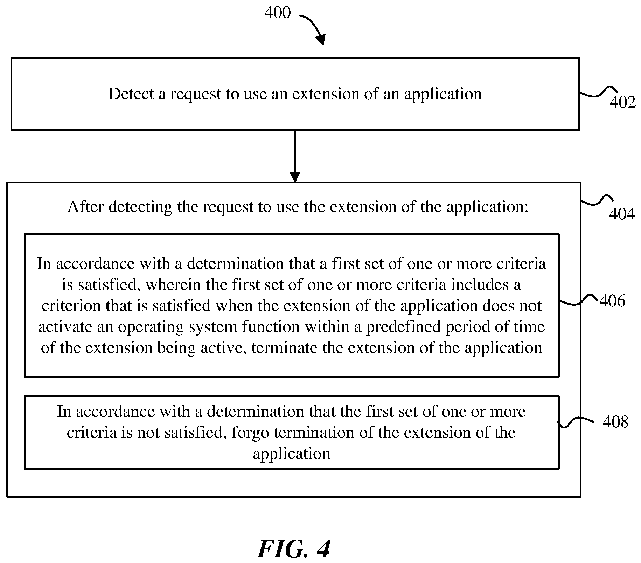

Memory 120 can include a computer readable medium (e.g., non-transitory or transitory computer readable medium) usable to store (e.g., configured to store, assigned to store, and/or that stores) program instructions executable by processor subsystem 110 to cause compute system 100 to perform various operations described herein. For example, memory 120 can store program instructions to implement the functionality associated with methods 400, 500, and 600 (FIGS. 4, 5, and 6) described below.

Memory 120 can be implemented using different physical, non-transitory memory media, such as hard disk storage, floppy disk storage, removable disk storage, flash memory, random access memory (RAM-SRAM, EDO RAM, SDRAM, DDR SDRAM, RAMBUS RAM, or the like), read only memory (PROM, EEPROM, or the like), or the like. Memory in compute system 100 is not limited to primary storage such as memory 120. Compute system 100 can also include other forms of storage such as cache memory in processor subsystem 110 and secondary storage on I/O device 140 (e.g., a hard drive, storage array, etc.). In some embodiments, these other forms of storage can also store program instructions executable by processor subsystem 110 to perform operations described herein. In some embodiments, processor subsystem 110 (or each processor within processor subsystem 110) contains a cache or other form of on-board memory.

I/O interface 130 can be any of various types of interfaces configured to communicate with other devices. In some embodiments, I/O interface 130 includes a bridge chip (e.g., Southbridge) from a front-side bus to one or more back-side buses. I/O interface 130 can communicate with one or more I/O devices (e.g., I/O device 140) via one or more corresponding buses or other interfaces. Examples of I/O devices include storage devices (hard drive, optical drive, removable flash drive, storage array, SAN, or their associated controller), network interface devices (e.g., to a local or wide-area network), sensor devices (e.g., camera, radar, LiDAR, ultrasonic sensor, GPS, inertial measurement device, or the like), and auditory or visual output devices (e.g., speaker, light, screen, projector, or the like). In some embodiments, compute system 100 is communicating with a network via a network interface device (e.g., configured to communicate over Wi-Fi, Bluetooth, Ethernet, or the like). In some embodiments, compute system 100 is directly or wired to the network.

Implementations within the scope of the present disclosure can be partially or entirely realized using a tangible computer-readable storage medium (or multiple tangible computer-readable storage media of one or more types) encoding one or more computer-readable instructions. It should be recognized that computer-executable instructions can be organized in any format, including applications, widgets, processes, software, and/or components.

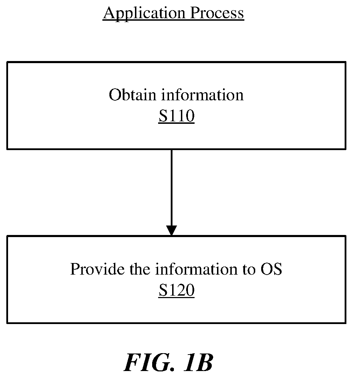

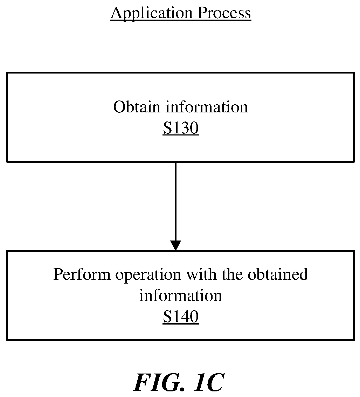

Implementations within the scope of the present disclosure include a computer-readable storage medium that encodes instructions organized as an application (e.g., application S160) that, when executed by one or more processing units, control an electronic device (e.g., device S150) to perform the method of FIG. 1B, the method of FIG. 1C, and/or one or more other processes and/or methods described herein.

It should be recognized that application S160 can be any suitable type of application, including, for example, one or more of: a messaging application, a maps application, a fitness application, a health application, a digital payments application, a media application, and/or a social network application. In some embodiments, application S160 is an application that is pre-installed on device S150 at purchase (e.g., a first party application). In other embodiments, application S160 is an application that is provided to device S150 via an operating system update file (e.g., a first party application or a second party application). In other embodiments, application S160 is an application that is provided via an application store. In some embodiments, the application store can be an application store that is pre-installed on device S150 at purchase (e.g., a first party application store). In other embodiments, the application store is a third-party application store (e.g., an application store that is provided by another application store, downloaded via a network, and/or read from a storage device).

Referring to FIG. 1B, application S160 obtains information (e.g., S110). In some embodiments, the information obtained at S110 includes positional information, time information, notification information, user information, environment information, electronic device state information, weather information, media information, historical information, event information, hardware information, and/or motion information. In some embodiments, in response to and/or after obtaining the information at S110, application S160 provides the information to operating system (e.g., S120).

Referring to FIG. 1C, application S160 obtains information (e.g., S130). In some embodiments, the information obtained at S130 includes positional information, time information, notification information, user information, environment information electronic device state information, weather information, media information, historical information, event information, hardware information and/or motion information. in response to and/or after obtaining the information at S130, application S160 performs an operation with the information (e.g., S140). In some embodiments, the operation performed at S140 includes: providing a notification based on the information, sending a message based on the information, displaying the information, controlling a user interface of a fitness application based on the information, controlling a user interface of a health application based on the information, controlling a focus mode based on the information, setting a reminder based on the information, adding a calendar entry based on the information, and/or calling an API of operating system S210 based on the information.

In some embodiments, one or more steps of the method of FIG. 1B and/or the method of FIG. 1C is performed in response to a trigger. In some embodiments, the trigger includes detection of an event, a notification received from operating system S210, a user input, and/or a response to a call to an API provided by operating system S210.

In some embodiments, the instructions of application S160, when executed, control device S150 to perform the method of FIG. 1B and/or the method of FIG. 1C by calling an application programming interface (API) (e.g., API S190) provided by operating system S210. In some embodiments, application S160 performs at least a portion of the method of FIG. 1B and/or the method of FIG. 1C without calling API S190.

In some embodiments, one or more steps of the method of FIG. 1B and/or the method of FIG. 1C includes calling an API (e.g., API S190) using one or more parameters defined by the API. In some embodiments, the one or more parameters include a constant, a key, a data structure, an object, an object class, a variable, a data type, a pointer, an array, a list or a pointer to a function or method, and/or another way to reference a data or other item to be passed via the API.

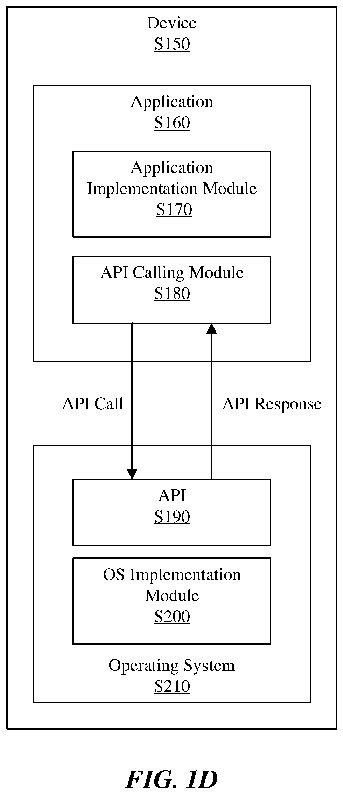

Referring to FIG. 1D, device S150 is illustrated. In some embodiments, device S150 is a personal computing device, a smart phone, a smart watch, a fitness tracker, a head mounted display (HMD) device, a media device, a communal device, a speaker, a television, and/or a tablet. As illustrated in FIG. 1D, device S150 includes application S160 and operating system S210. Application S160 includes application implementation module S170 and API calling module S180. Operating system S210 includes API S190 and OS implementation module S200. It should be recognized that device S150, application S160, and/or operating system S210 can include more, fewer, and/or different components than illustrated in FIG. 1D.

In some embodiments, application implementation module S170 includes a set of one or more instructions corresponding to one or more operations performed by application S160. For example, when application S160 is a messaging application, application implementation module S170 can include operations to receive and send messages. In some embodiments, application implementation module S170 communicates with API calling module to communicate with operating system S210 via API S190.

In some embodiments, API S190 is a software module (e.g., a collection of computer-readable instructions) that provides an interface that allows a different module (e.g., API calling module S180) to access and/or use one or more functions, methods, procedures, data structures, classes, and/or other services provided by OS implementation module S200 of operating system S210. For example, API-calling module S180 can access a feature of OS implementation module S200 through one or more API calls or invocations (e.g., embodied by a function or a method call) exposed by API S190 and can pass data and/or control information using one or more parameters via the API calls or invocations. In some embodiments, API S190 allows application S160 to use a service provided by a Software Development Kit (SDK) library. In other embodiments, application S160 incorporates a call to a function or method provided by the SDK library and provided by API S190 or uses data types or objects defined in the SDK library and provided by API S190. In some embodiments, API-calling module S180 makes an API call via API S190 to access and use a feature of OS implementation module S200 that is specified by API S190. In such embodiments, OS implementation module S200 can return a value via API S190 to API-calling module S180 in response to the API call. The value can report to application S160 the capabilities or state of a hardware component of device S150, including those related to aspects such as input capabilities and state, output capabilities and state, processing capability, power state, storage capacity and state, and/or communications capability. In some embodiments, API S190 is implemented in part by firmware, microcode, or other low level logic that executes in part on the hardware component.

In some embodiments, API S190 allows a developer of API-calling module S180 (which can be a third-party developer) to leverage a feature provided by OS implementation module S200. In such embodiments, there can be one or more API-calling modules (e.g., including API-calling module S180) that communicate with OS implementation module S200. In some embodiments, API S190 allows multiple API-calling modules written in different programming languages to communicate with OS implementation module S200 (e.g., API S190 can include features for translating calls and returns between OS implementation module S200 and API-calling module S180) while API S190 is implemented in terms of a specific programming language. In some embodiments, API-calling module S180 calls APIs from different providers such as a set of APIs from an OS provider, another set of APIs from a plug-in provider, and/or another set of APIs from another provider (e.g., the provider of a software library) or creator of the another set of APIs.

Examples of API S190 can include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a bluetooth API, an NFC API, a UWB API, a fitness API, a smart home API, contact transfer API, photos API, camera API, and/or image processing API. In some embodiments the sensor API is an API for accessing data associated with a sensor of device S150. For example, the sensor API can provide access to raw sensor data. For another example, the sensor API can provide data derived (and/or generated) from the raw sensor data. In some embodiments, the sensor data includes temperature data, image data, video data, audio data, heart rate data, IMU (inertial measurement unit) data, lidar data, location data, GPS data, and/or camera data. In some embodiments, the sensor includes one or more of an accelerometer, temperature sensor, infrared sensor, optical sensor, heartrate sensor, barometer, gyroscope, proximity sensor, temperature sensor and/or biometric sensor.

In some embodiments, OS implementation module S200 is an operating system software module (e.g., a collection of computer-readable instructions) that is constructed to perform an operation in response to receiving an API call via API S190. In some embodiments, OS implementation module S200 is constructed to provide an API response (via API S190) as a result of processing an API call. By way of example, OS implementation module S200 and API-calling module 180 can each be any one of an operating system, a library, a device driver, an API, an application program, or other module. It should be understood that OS implementation module S200 and API-calling module S180 can be the same or different type of module from each other. In some embodiments, OS implementation module S200 is embodied at least in part in firmware, microcode, or other hardware logic.

In some embodiments, OS implementation module S200 returns a value through API S190 in response to an API call from API-calling module S180. While API S190 defines the syntax and result of an API call (e.g., how to invoke the API call and what the API call does), API S190 might not reveal how OS implementation module S200 accomplishes the function specified by the API call. Various API calls are transferred via the one or more application programming interfaces between API-calling module S180 and OS implementation module S200. Transferring the API calls can include issuing, initiating, invoking, calling, receiving, returning, and/or responding to the function calls or messages. In other words, transferring can describe actions by either of API-calling module S180 or OS implementation module S200. In some embodiments, a function call or other invocation of API S190 sends and/or receives one or more parameters through a parameter list or other structure.

In some embodiments, OS implementation module S200 provides more than one API, each providing a different view of or with different aspects of functionality implemented by OS implementation module S200. For example, one API of OS implementation module S200 can provide a first set of functions and can be exposed to third party developers, and another API of OS implementation module S200 can be hidden (e.g., not exposed) and provide a subset of the first set of functions and also provide another set of functions, such as testing or debugging functions which are not in the first set of functions. In some embodiments, OS implementation module S200 calls one or more other components via an underlying API and thus be both an API calling module and an OS implementation module. It should be recognized that OS implementation module S200 can include additional functions, methods, classes, data structures, and/or other features that are not specified through API S190 and are not available to API calling module S180. It should also be recognized that API calling module S180 can be on the same system as OS implementation module S200 or can be located remotely and access OS implementation module S200 using API S190 over a network. In some embodiments, OS implementation module S200, API S190, and/or API-calling module S180 is stored in a machine-readable medium, which includes any mechanism for storing information in a form readable by a machine (e.g., a computer or other data processing system). For example, a machine-readable medium can include magnetic disks, optical disks, random access memory; read only memory, and/or flash memory devices.

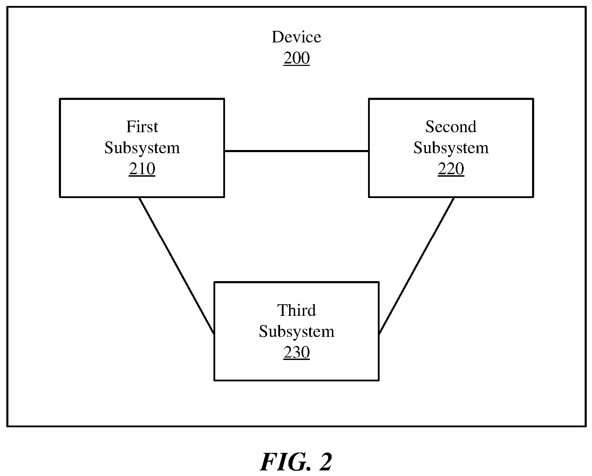

FIG. 2 illustrates a block diagram of device 200 with interconnected subsystems. In the illustrated example, device 200 includes three different subsystems (i.e., first subsystem 210, second subsystem 220, and third subsystem 230) communicating with (e.g., wired or wirelessly) each other, creating a network (e.g., a personal area network, a local area network, a wireless local area network, a metropolitan area network, a wide area network, a storage area network, a virtual private network, an enterprise internal private network, a campus area network, a system area network, and/or a controller area network). An example of a possible computer architecture of a subsystem as included in FIG. 2 is described in FIG. 1A (i.e., compute system 100). Although three subsystems are shown in FIG. 2, device 200 can include more or fewer subsystems.

In some embodiments, some subsystems are not connected to other subsystem (e.g., first subsystem 210 can be connected to second subsystem 220 and third subsystem 230 but second subsystem 220 cannot be connected to third subsystem 230). In some embodiments, some subsystems are connected via one or more wires while other subsystems are wirelessly connected. In some embodiments, messages are set between the first subsystem 210, second subsystem 220, and third subsystem 230, such that when a respective subsystem sends a message the other subsystems receive the message (e.g., via a wire and/or a bus). In some embodiments, one or more subsystems are wirelessly connected to one or more compute systems outside of device 200, such as a server system. In such examples, the subsystem can be configured to communicate wirelessly to the one or more compute systems outside of device 200.

In some embodiments, device 200 includes a housing that fully or partially encloses subsystems 210-230. Examples of device 200 include a home-appliance device (e.g., a refrigerator or an air conditioning system), a robot (e.g., a robotic arm or a robotic vacuum), and a vehicle. In some embodiments, device 200 is configured to navigate (with or without user input) in a physical environment.

In some embodiments, one or more subsystems of device 200 are used to control, manage, and/or receive data from one or more other subsystems of device 200 and/or one or more compute systems remote from device 200. For example, first subsystem 210 and second subsystem 220 can each be a camera that captures images, and third subsystem 230 can use the captured images for decision making. In some embodiments, at least a portion of device 200 functions as a distributed compute system. For example, a task can be split into different portions, where a first portion is executed by first subsystem 210 and a second portion is executed by second subsystem 220.

Attention is now directed towards techniques for managing content. Such techniques are described in the context of a camera being used while in a device is locked. It should be recognized that other types of hardware devices and/or contexts can be used with techniques described herein. For example, a microphone and/or unlocked context can be used with techniques described herein. In addition, techniques optionally complement or replace other techniques for managing content.

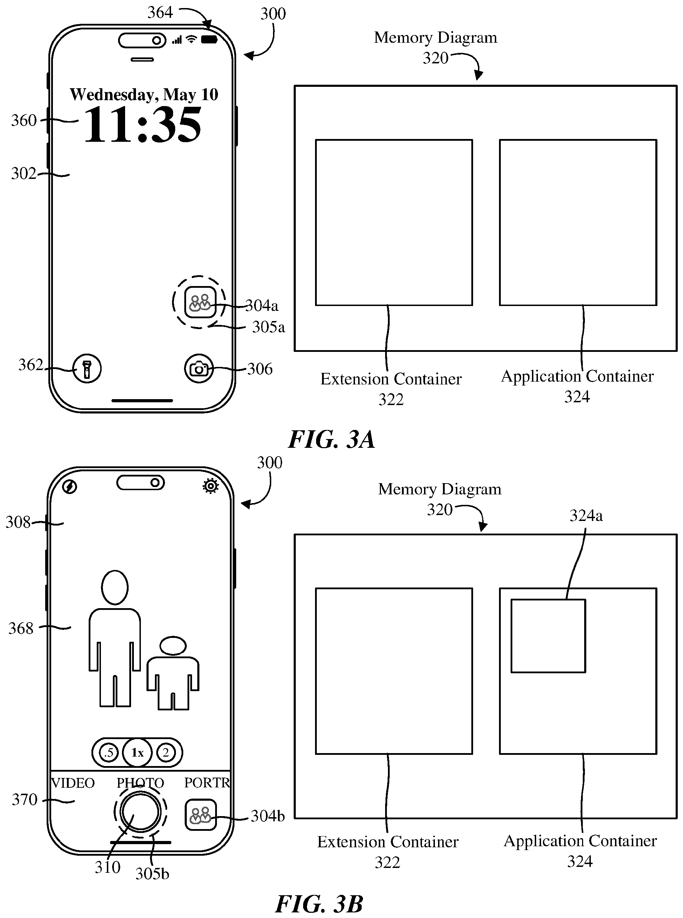

FIGS. 3A-3K illustrate exemplary user interfaces for securely using an extension of an application in accordance with some embodiments. The user interfaces in these figures are used to illustrate the processes described below, including the processes of FIGS. 4-6.

As illustrated in FIGS. 3A-3K, each figure is split between a left portion and a right portion. The left portion of each figure illustrates user interfaces displayed by device 300. The user interfaces of FIGS. 3A-3K are used for exemplary purposes and techniques described herein should not be limited to such. The right portion of each figure illustrates memory diagram 320 of device 300. Memory diagram 320 is a representation of memory of device 300 and what is stored therein. As illustrated in FIGS. 3A-3K, memory diagram 320 includes extension container 322 (e.g., a container allocated for the extension of the application) and application container 326 (e.g., a container allocated for the application). In some embodiments, a container is a block and/or section of memory of device 300 that is dynamically allocated to store data, assets, processes, and/or code corresponding to an application, an extension, and/or a service on device 300. In some embodiments, different containers are allocated for each instance of the extension. In other embodiments, the same container is used for different instances of the extension.

As illustrated in FIGS. 3A-3K, device 300 is a smart phone, the extension is for capturing images, and the application is a social media application. It should be recognized that device 300 can be other types of computer systems, such as a smart watch, a laptop, a communal device, a smart speaker, an accessory, a personal gaming system, a desktop computer, a fitness tracking device, and/or a head-mounted display (HMD) device. It should also be recognized that the extension can be other types of extensions, such as an extension for performing a calculation, outputting sensor data, and/or storing data. It should also be recognized that the social media application can be other types of applications, such as a note-taking application, a word-processing application, a document-processing application, a presentation application, an email application, a form processing application such as for PDF viewer and/or editor, a game, a messaging application, a maps application, a fitness application, a health application, a digital payments application, and/or a media application.

FIGS. 3A-3E illustrate a first use of the extension of the application in accordance with some embodiments. At FIG. 3A, device 300 is in a locked state and displays lock screen 302. As illustrated in FIG. 3A, lock screen 302 includes date time indication 360, system information 364, flashlight icon 362, extension icon 304a, and camera icon 306. In some embodiments, device 300 is in the locked state due to a user not being authenticated. For example, a user has not logged into device 300 and/or a user locked device 300 without unlocking. In some embodiments, the locked state does not require display of lock screen 302 but rather corresponds to a reduced set of functionalities and/or reduced access of device 300. For example, while device 300 is in the locked state, a reduced number of applications can be accessed and/or launched, a portion of storage of device 300 is not accessible by a user, and/or one or more applications on device 300 have reduced access to external devices, services, and/or networks. In some embodiments, an application, an extension, and/or a widget can be displayed, launched, and/or used while device 300 is in the locked state and/or from lock screen 302. For example, user interface 308, as discussed further with respect to FIG. 3B, can be displayed while device 300 is in the locked state. In some embodiments, an application, an extension, and/or a widget displayed while device 300 is in the locked state has a reduced set of functionalities as compared to while device 300 is in an unlocked state. For example, the extension of the application can be more limited to where the extension can access and/or store data while device 300 is in the locked state as compared to while device 300 is in an unlocked state. For another example, the extension of the application can be required to request authentication of a user prior to launching the application corresponding to the extension and/or access one or more capabilities of device 300.

At FIG. 3A, application container 324 and extension container 322 are depicted as empty to illustrate creation of directories (e.g., directory 324a and/or directory 324b), storage of data (e.g., data 322a and/or data 322b), and movement of the data between containers (e.g., extension container 322 and application container 324) in later figures.

At FIG. 3A, detecting input corresponding to either camera icon 306 or extension icon 304a causes device 300 to use a hardware component of device 300, such as a camera. In some embodiments, detecting input corresponding to camera icon 306 causes device 300 to launch a system application (sometimes referred to as an operating system application) corresponding to the camera and/or display a user interface of the system application. For example, the user interface of the system application can be a camera user interface that includes display of a live view of the camera and allows capture of content corresponding to the live view. In some embodiments, detecting input corresponding to extension icon 304a causes device 300 to launch an extension of the application, display a user interface of the extension, and/or display the user interface of the system application. In such embodiments, the extension can use the camera to perform one or more operations on behalf of the application. In some embodiments, a camera driver is used for the system application and/or the extension to use the camera of device 300. For example, the extension can request a live view from the camera driver and, in response, the camera driver can provide the live view and/or an address to retrieve the live view to the extension.

While in the locked state, device 300 detects selection input 305a on extension icon 304a. For example, selection input 305a can be a tap input that corresponds to a request to launch the extension of the application.

At FIG. 3B, in response to detecting selection input 305a on extension icon 304a, device 300 launches a first instance of the extension of the application and displays user interface 308. As illustrated in FIG. 3B, user interface 308 includes camera feed 368 and control dock 370. In some embodiments, camera feed 368 is an active image or video feed from the camera of device 300. In some embodiments, the first instance of the extension of the application receives camera feed 368 from the camera via the camera driver as described above. As illustrated in FIG. 3B, camera feed 368 contains an adult and a child. As illustrated in FIG. 3B, control dock 370 includes capture control 310, a mode selection control (e.g., currently on Photo mode), and application icon 304b. In some embodiments, application icon 304b is used to cause a user interface of the application (e.g., and not the extension) to be displayed. In some embodiments, user interface 308 provides additional functionality that is not included in a system application for the camera. For example, user interface 308 can provide one or more filters of the extension that can be applied to camera feed 368, editing functionality of the extension to modify and/or enhance a captured image via user interface 308, and/or posting functionality of the extension to send a captured image to a social media account connected to the application (e.g., once device 300 is unlocked).

Also illustrated in FIG. 3B, in response to detecting selection input 305a on extension icon 304a, launching the extension, and/or displaying user interface 308, directory 324a is created within application container 324 (e.g., by a system process). In some embodiments, directory 324a is associated with the first instance of the extension. At FIG. 3B, while and/or after the first instance of the extension is launched, the extension is provided a first path to directory 324a (e.g., by the system process). In some embodiments, the first path is a unique path within application container 324 (e.g., unknown by the application). In some embodiments, the extension is able to access extension container 322 but has limited access to application container 324 (e.g., only access to directory 324a via the first path and not another location within application container 324 and/or outside of directory 324a). For example, the extension can use extension container 322 and/or directory 324a for storage of data from the first instance of the extension.

In some embodiments, upon launching additional instances of the extension, other unique directories will be created and/or assigned to the additional instances within application container 324. In such embodiments, each additional instance of the extension can be provided a unique path to a corresponding directory. Notably, this separation prevents different instances of the extension from accessing data and/or device 300's storage outside of the path provided to the extension. Additionally, due to device 300 being in the locked state, the separation prevents unauthorized access to device 300 and/or application's from using extensions to get around device 300's limited locked state functionality, such as preventing unauthorized posting on the application, unauthorized access to device 300's storage, and/or unauthorized displaying of user information from an extension. Discussed another way, while the extension is active, the extension must utilize its own container and/or a particular directory provided to it at launch prior to device 300 being unlocked.

In some embodiments, after detecting the request to launch the extension, device 300 (e.g., a system process of device 300) determines whether the extension has activated an operating system function within a predefined period of time. In such embodiments, in response to a determination that the extension has not activated an operating system function within the predefined period of time, device 300 (e.g., the system process) terminates the extension. In some embodiments, an operating system function includes initiating a process corresponding to a hardware component. For example, the extension can be terminated (and/or display of user interface 308 can be ceased) due to the extension failing to activate and/or obtain content from the camera within the predefined period of time.

At FIG. 3B, while displaying camera extension 308, device 300 detects selection input 305b on capture control 310. For example, selection input 305b can be a tap input that corresponds to a request to capture an image via the camera of device 300.

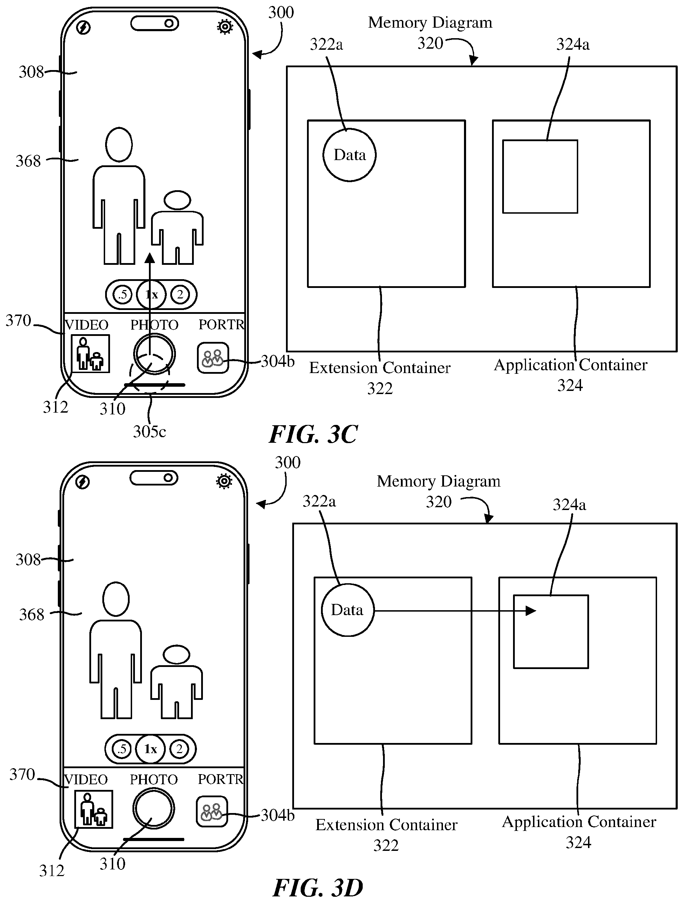

At FIG. 3C, in response to detecting selection input 305b on capture control 310, device 300 captures an image (e.g., as depicted by camera feed 368 at FIG. 3B and represented by data 322a in FIG. 3C). In some embodiments, capturing the image includes the extension sending a request to capture the image to the camera driver described above. In some embodiments, in response to capturing the image, data 322a is stored in extension container 322. In other embodiments, in response to capturing the image, data 322a is stored in in directory 324a of application container 324. As illustrated in FIG. 3C, directory 324a remains empty due to the extension not yet storing data 322a in directory 324a.

As illustrated in FIG. 3C, in response to detecting selection input 305b on capture control 310, device 300 displays thumbnail 312 in control dock 370. At FIG. 3C, thumbnail 312 is a reduced size version of the image. At FIG. 3C, camera extension 308 includes thumbnail 312 due to image 342 being the most recently captured image. At FIG. 3C, due to data 322a being stored in extension container 322, camera extension 308 can freely access data 322a.

After capturing the image and storing data 322a in extension container 322, device 300 detects swipe input 305c. In some embodiments, swipe input 305c is a request to terminate the current instance of the extension (e.g., the first instance of the extension).

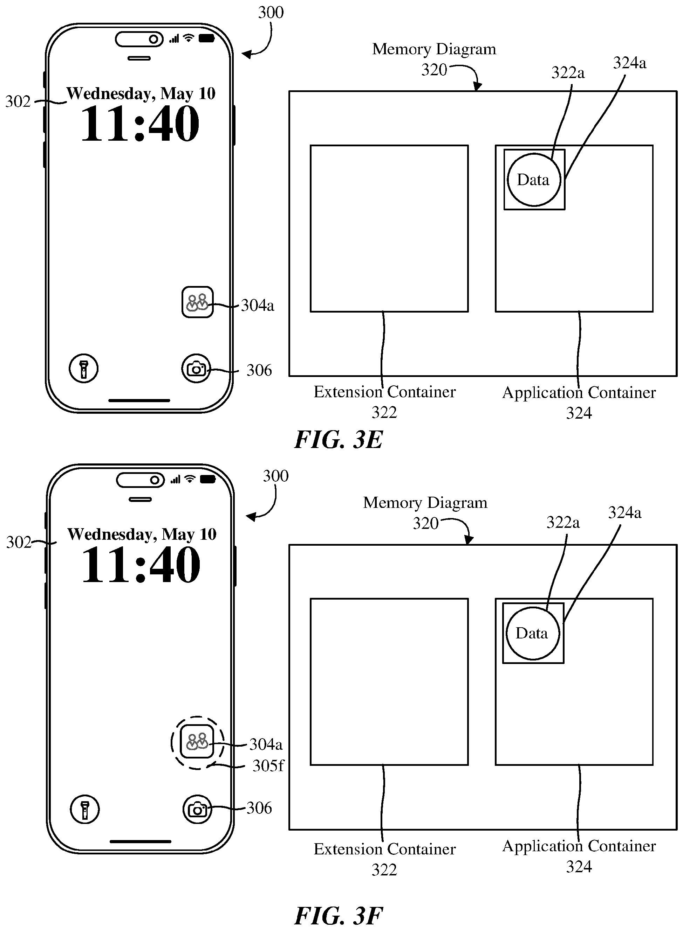

At FIG. 3D, in response to detecting swipe input 305c, the first instance of the extension begins to terminate. In some embodiments, as part of terminating, user interface 308 is blurred and/or darkened to depict the termination of the extension. In some embodiments, termination of the extension causes device 300 to display lock screen 302, as illustrated in FIG. 3E.

Also, at FIG. 3D, in response to detecting swipe input 305c, data 322a is stored in directory 324a (e.g., explicitly by the extension and/or implicitly by a system process managing termination of the first instance of the extension). The storage of data 322a is illustrated in FIGS. 3D-3E by the movement of data 322a from extension container 322 to directory 324a in application container 324. It should be recognized that such storage can occur at other times than described herein, such as at the time of capture, in response to a request by the first instance of the extension, and/or in response to detecting a request to unlock device 300.

At FIG. 3D, after storing data 322a in directory 324a, device 300 clears and/or erases content of extension container 322 as part of terminating the first instance of the extension. In some embodiments, storage of data 322a includes copying data 322a into directory 324a, and erasing includes deleting data 322a from extension container 322. In some embodiments, storage of data 322a includes moving data 322a into directory 324a, and erasing includes verifying that extension container 322 is empty. Notably, the process of cleaning up extension container 322 as part of terminating the extension prevents data stored by one instance of the extension from being accessed by other instances of the extension. This separation of instances of the extension provides security of data from instance to instance.

As illustrated in FIG. 3E, after terminating the first instance of the extension, device 300 displays lock screen 302. At FIG. 3E, as part of terminating the first instance of the extension, device 300 no longer displays user interface 308. Also illustrated in FIG. 3E, data 322a is stored in directory 324a of application container 324. As illustrated in FIG. 3E, extension container 322 has been erased and/or cleaned up due to the termination of the first instance of the extension. In some embodiments, data 322a remains stored within directory 324a until application 340 alters, modifies, and/or deletes data 322a. In some embodiments, due to data 322a being stored in directory 324a, other instance of the extension will be unable to access 322a while device 300 is locked due to being limited to new directories, different and/or outside of directory 324a.

FIGS. 3F-3K illustrate a second instance of the extension in accordance with some embodiments. Similarly to FIG. 3A, FIG. 3F illustrates device 300 displaying lock screen 302. In some embodiments, device 300 displays lock screen 302 due to recently closing the extension and/or one or more other extensions. In some embodiments, device 300 displays lock screen 302 due to device 300 awaking and/or turning on. For example, device 300 is in a low power mode and/or inactive state, and device 300 detects movement of device 300 and/or an input on device 300 (e.g., on a touch sensitive display).

Unlike FIG. 3A, FIG. 3F illustrates memory diagram 320 containing data (e.g., data 322a) from a previous instance (e.g., the first instance) of the extension. As illustrated in FIG. 3F, data 322a remains stored within directory 324a of application container 324. In some embodiments, data 322a is not modified based on device 300 returning to a locked state and/or no longer displaying user interface 308 due to data 322a being stored in directory 324a. In some embodiments, due to data 322a remaining stored in directory 324a, upon unlocking device 300, application 340 and/or a user can access data 322a. While displaying lock screen 302, device 300 detects selection input 305f on extension icon 304a. For example, selection input 305f can be a tap input that corresponds to a request to launch the extension of the application.

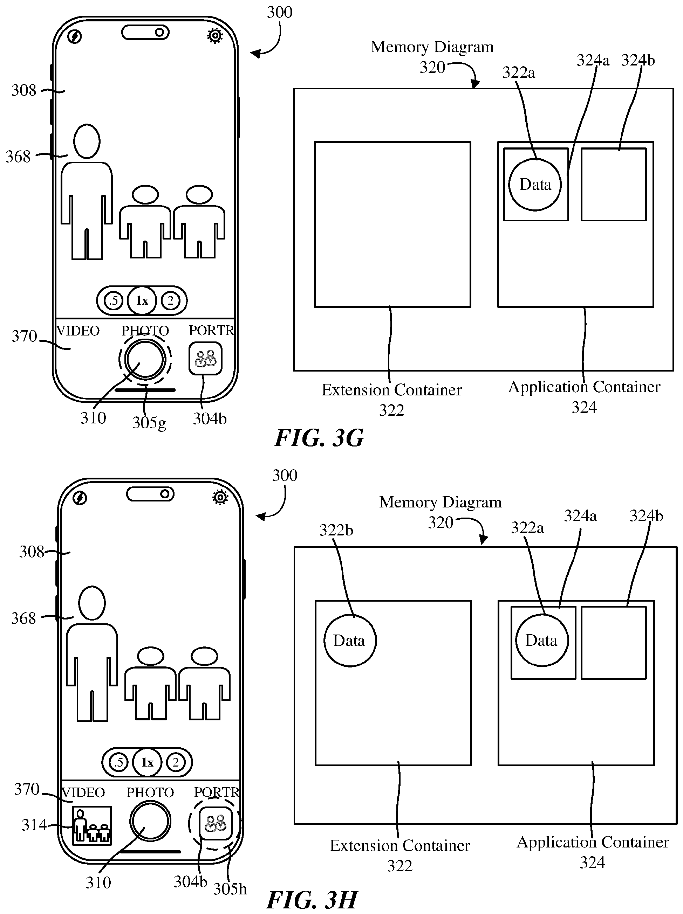

At FIG. 3G, in response to detecting selection input 305f, device 300 launches the second instance of the extension and displays user interface 308. As illustrated in FIG. 3G, user interface 308 corresponding to the second instance of the extension contains the same elements and controls as user interface 308 corresponding to the first instance of the extension. At FIG. 3G, the second instance of the extension is the same extension of the same application as the first instance of the extension. As illustrated in FIG. 3G, user interface 308 no longer includes thumbnail 312 within control dock 370. At FIG. 3G, the second instance of the extension is unable to access data 322a and/or directory 324a. Notably, the lack of access prevents the extension from accessing image 342 and/or thumbnail 312, separating content captured from other instances of the extension.

Also illustrated in FIG. 3G, memory diagram 320 contains newly created directory 324b. At FIG. 3G, directory 324b is created for use by the second instance of the extension. As discussed above, unique directories are created for each instance of the extension. At FIG. 3G, to allow the extension to store data in directory 324b, a second path is provided to the second instance of the extension. In some embodiments, the extension is only allowed to access data in directory 324b with respect to application container 324, and any request to access storage outside of directory 324b with respect to application container 324 is declined. While displaying user interface 308, device 300 detects selection input 305g on capture control 310. For example, selection input 305g can be a tap input that corresponds to a request to capture an image via the camera of device 300.

At FIG. 3H, in response to detecting selection input 305g on capture control 310, device 300 captures an image (as depicted by camera feed 368 at FIG. 3G and represented by data 322b). In some embodiments, capturing the image at FIG. 3H includes the same process as capturing the image at FIG. 3C due to both images being captured by the extension. In some embodiments, due to different instances of the extension being used, the images are stored in different containers (e.g., a container corresponding to a current instance of the extension). As illustrated in FIG. 3H, data 322b is within extension container 322 due to being stored by the extension (e.g., the second instance of the extension). As illustrated in FIG. 3H, directory 324b remains empty due to the extension not yet storing data 322b in directory 324b.

As illustrated in FIG. 3H, in response to detecting selection input 305g on capture control 310, device 300 displays thumbnail 314 in control dock 370. At FIG. 3C, thumbnail 316 is a reduced size version of the image captured at FIG. 3H. After capturing the image and storing data 322b in extension container 322, device 300 detects selection input 305h on application icon 304b. For example, selection input 305h can be a tap input that corresponds to a request to unlock device 300 and/or display a user interface of the application. In some embodiments, in response to detecting selection input 305h on application icon 304b, the extension sends a request to a system process via an API to authenticate a user and/or unlock device 300.

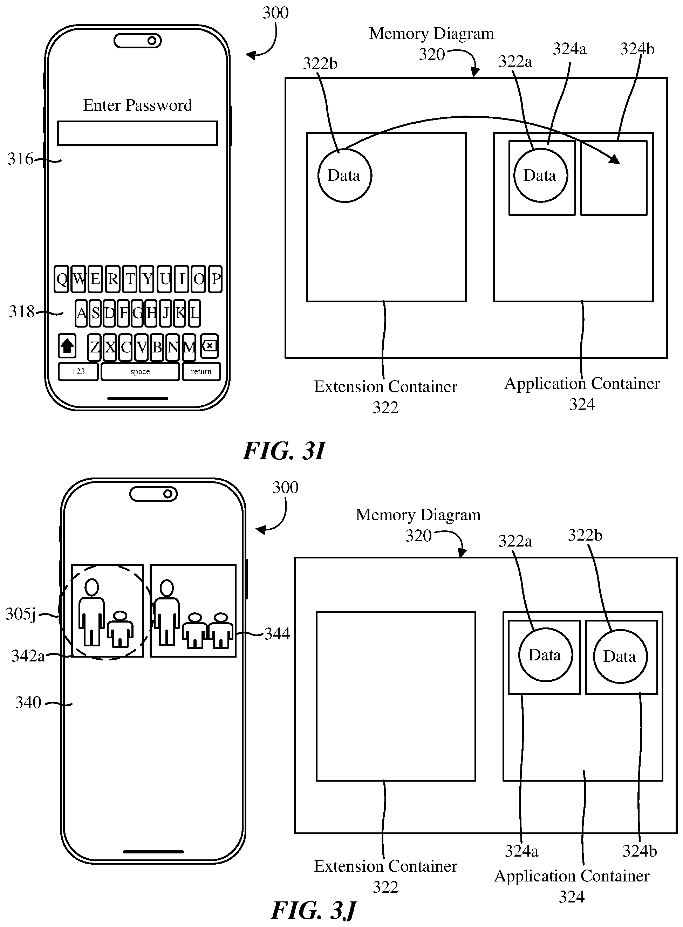

At FIG. 3I, in response to detecting selection input 305h on application icon 304b, device 300 displays authentication user interface 316. As illustrated in FIG. 3I, authentication user interface 316 includes a password field and keyboard 318. At FIG. 3I, to launch the application as illustrated in FIG. 3J, a user must enter a valid password into authentication user interface 316. It should be recognized that other types of authentication can be used with techniques described herein.

Also illustrated in FIG. 3I, in response to detecting selection input 305h on application icon 304b, data 322b is stored in directory 324b of application container 324. In some embodiments, data 322b is stored in directory 324b prior to authenticating the user and/or detecting selection input 305h. In some embodiments, upon launching authentication user interface 316, the second instance of the extension is terminated the same or similar to as discussed above with respect to the first instance of the extension at FIG. 3D. In some embodiments, the user must be authenticated via authentication user interface 316 prior to data 322b being stored in directory 324b.

After FIG. 3I, while displaying authentication user interface 316, a user is successfully authenticated. In some embodiments, successfully authenticating the user initiates a process to terminate the second instance of the extension 308, as discussed above with respect to the first instance of the extension at FIG. 3D. In some embodiments, upon successfully authenticating the user, data 322b is stored in in directory 324b of application container 324.

In some embodiments, after FIG. 3I, the application sends a request for paths that were previously provided to one or more extensions of the application. In such embodiments, the application is provided all paths provided to the one or more extensions of the application, paths provided to the one or more extensions of the application since last being requested by the application, and/or paths provided to the one or more extensions of the application that have not been voided by the application. For example, the application can be provided the first path provided to the first instance of the extension and the second path provided to the second instance of the extension. In some embodiments, upon receiving the one or more paths, the application obtains data 322a and/or data 322b by accessing the one or more paths (e.g., the first path and/or the second path). In some embodiments, the application stores data 322a and/or data 322b outside of directory 324a and/or directory 324b. For example, the application can store data 322a and/or data 322b within application container 324 that is outside of directory 324a and/or directory 324b. In some embodiments, the application invalidates directory 324a and/or directory 324b after storing data 322a and/or data 322b within application container 324 outside of directory 324a and/or directory 324b. In such embodiments, the invalidation can occur by sending a request to a process that the application requested the paths from. In some embodiments, the application is not aware of the images stored by the extensions until requesting paths.

At FIG. 3J, after successfully authenticating the user and obtaining paths that were previously provided to the one or more extensions of the application, device 300 is unlocked and displays user interface 340 of the application. As illustrated in FIG. 3J, user interface 340 includes representation 342a and representation 344. In some embodiments, representation 342a corresponds to the image captured at FIG. 3C and representation 344 corresponds to the image captured at FIG. 3H. It should be recognized that user interface 340 can include other user interface elements including other images captured by the extension and/or the application.

While displaying application 340, device 300 detects selection input 305j on representation 342a. For example, selection input 305j can be a tap input that corresponds to representation 342a.

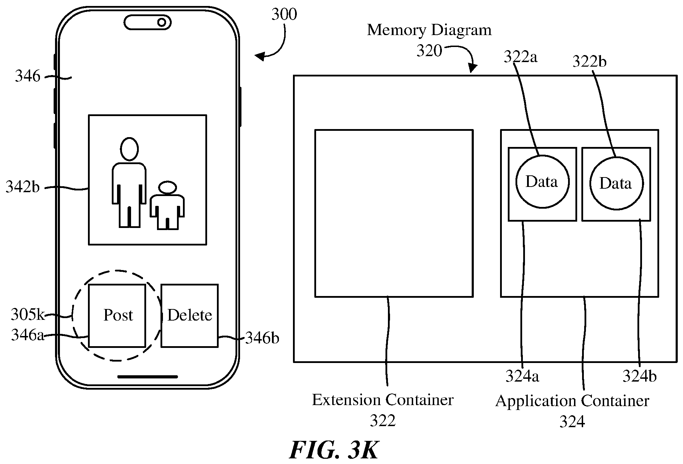

At FIG. 3K, in response to detecting selection input 305j on representation 342a, device 300 displays post control user interface 346 with representation 342b. In some embodiments, post control user interface 346 is a sub menu of the application that allows a user to post and/or delete an image. At FIG. 3K, post control user interface 346 corresponds to representation 342b due to the user selecting representation 342a through selection input 305j. At FIG. 3K, the user can post the image captured at FIG. 3C by selecting post control 346a or delete the image by selecting delete control 346b. Also, as illustrated in FIG. 3K, data 322a remains stored in directory 324a and data 322b remains stored in directory 324b. While displaying post control user interface 346, device 300 detects selection input 305k on post control 346a. For example, selection input 305k can be a tap input that corresponds to post control 346a.

At FIG. 3K, in response to detecting selection input 305k on post control 346a, device 300 initiates a process to post the image to the user's social media account. In some embodiments, while the application is displaying representation 342b in post control user interface 346, the application sends a request to a communication process to send data 322a to a remote application, service, and/or device. For example, the communication process accesses directory 324a and sends data 322a via an application program interface (e.g., API) of the remote application to post the image on the social media platform corresponding to the application.

While the above description is with respect to a single extension and a single application, it should be recognized that techniques described herein can be used with more than one extension and/or more than one application. For example, the same system process providing paths to extensions and/or applications can be used for different applications. In addition, while the above description is with respect to launching an extension from a lock screen, it should be recognized that techniques described herein can be used while displaying a user interface of an application that does not correspond to an extension. For example, the application that does not correspond to the extension can use techniques described above in order to use functionality of extensions of other applications in a secure and/or a private manner.

FIG. 4 is a flow diagram illustrating a method (e.g., method 400) for enforcing use of a hardware component in accordance with some embodiments. Some operations in method 400 are, optionally, combined, the orders of some operations are, optionally, changed, and some operations are, optionally, omitted.

As described below, method 400 provides an intuitive way for enforcing use of a hardware component. Method 400 reduces the cognitive burden on a user, thereby creating a more efficient human-machine interface. For battery-operated computing devices, enabling a user to interact with such devices faster and more efficiently conserves power and increases the time between battery charges.

In some embodiments, method 400 is performed at a system process of a device (e.g., a locked device, an unlockable device, and/or a personal device). In some embodiments, the device is a smart phone, a smart watch, a wearable device, a head-mounted-display (HMD) device, a laptop, a tablet, and/or a desktop computer. In some embodiments, the device is in communication with an input component (e.g., a camera, a depth sensor, a microphone, a hardware input mechanism, a rotatable input mechanism, a heart monitor, a temperature sensor, and/or a touch-sensitive surface) and/or an output component (e.g., a display generation component, an audio generation component, and/or a haptic generation device). In some embodiments, the display generation component is a display screen, a projector, and/or a touch-sensitive display. In some embodiments, the audio generation component is a speaker, a smart speaker, a home theater system, a soundbar, a headphone, an earphone, an earbud, a television speaker, an augmented reality headset speaker, an audio jack, an optical audio output, a Bluetooth audio output, and/or a HDMI audio output. In some embodiments, the system process is part of and/or executing on behalf of an operating system of the device. In some embodiments, the system process facilitates communication between one or more applications on the device and one or more hardware components of the device. In some embodiments, the system process facilitates secure processes and/or hardware-based processes (e.g., processes active while the device is locked and/or processes seeking to access a hardware component of the device).

The system process detects (402) (and/or receives) a request to use (e.g., launch, run, execute, make active from being inactive, and/or provide focus to) an extension of an application (e.g., of the device and/or of another device different from the device, such as a system application, a first party application, a service, a third party application, and/or an application interface such as an application stored remotely and/or a web based application) (e.g., 305a and/or 305f). In some embodiments, the application includes functionality requiring access to the hardware of the device (e.g., a social media application requiring a camera and/or storage, a music application requiring a speaker and/or storage, and/or a web application requiring network connectivity). In some embodiments, detecting the request to use the extension of the application includes detecting, while the device is locked, a process by a lock screen and sending an indication corresponding to the process to the system process. In some embodiments, detecting the request to use the extension of the application includes detecting an event and/or alert by a lock screen and forwarding the event and/or alert to the system process. In some embodiments, detecting the request to use the extension includes detecting an input by a lock screen and/or home screen and sending the input and/or process corresponding to the input to the system process. In some embodiments, the extension includes a subset of functionality from and/or of the application, a set of one or more functionalities defined by the application, the device, and/or an operating system of the device, and/or a limited set of one or more functionalities corresponding to the application and/or hardware functionality. In some embodiments, the extension includes and/or has a set of one or more functionalities (e.g., provided to the application) while the device is in a locked state (e.g., ability to take and/or save an image and/or video while the device is locked without interacting directly with the application and/or launching the application). In some embodiments, the request includes (1) a request to use a set of one or more hardware functions and/or capabilities (e.g., a request for a camera extension includes a request to enable camera hardware), (2) an application identifier, and/or (3) application container identifier (e.g., a path and/or identifier for the device and/or the system process to use to assign memory and/or storage for the extension). In some embodiments, the system process detects the request to use the extension of the application while the computer system is locked. In some embodiments, the extension operates separate from the application. In some embodiments, the extension communicates with the application. In some embodiments, the extension does not communicate with the application. In some embodiments, the extension is configured to be able to communicate with the application with the device is unlocked but not while the device is locked.

After (404) detecting the request to use the extension of the application (and/or in conjunction with the extension being active (e.g., without the application being active)), in accordance with a determination that a first set of one or more criteria is satisfied, wherein the first set of one or more criteria includes a criterion that is satisfied when the extension of the application does not activate (and/or use) an operating system function (e.g., a process and/or function that uses a hardware component, such as a camera, a microphone, and/or a speaker, and/or hardware based functionality) within a predefined period of time (e.g., 3-10 seconds) of the extension being active (e.g., time since the request to use the extension, time since the extension was launched, and/or time since the extension last activated an operating system function), the system process terminates (406) (e.g., closes, makes inactive, erases memory corresponding to, takes focus away, kills, and/or voids) the extension of the application. In some embodiments, the system process terminates the extension of the application by closing the extension, ending one or more processes corresponding to the extension, removing a connection of the extension, removing an ability of the extension to communicate with one or more hardware components (e.g., camera, microphone, speaker, memory, and/or storage), and/or clearing and/or voiding memory corresponding to the extension.

After (404) detecting the request to use the extension of the application, in accordance with a determination that the first set of one or more criteria is not satisfied, the system process forgoes (408) termination of the extension of the application.

In some embodiments, the system process of the device is in communication with a hardware component (e.g., a camera, speaker, microphone, and/or electrically connected internal and/or external component). In some embodiments, activation (e.g., use and/or initiation), via the extension of the application, of the operation system function includes activation (e.g., use and/or initiation) of the hardware component (and/or one or more functions of the hardware component, such as capturing a picture, recording a video, and/or changing a field of view of a camera). In some embodiments, the device includes the hardware component. In some embodiments, the system process of the device is in communication with more than one hardware component (e.g., of the device and/or external to the device). In some embodiments, activation of the hardware component includes activating one or more functions of the hardware component and/or one or more functions across more than one hardware component.

In some embodiments, the hardware component is a camera. In some embodiments, a camera includes one or more field of views. In some embodiments, an extension of an application using one or more cameras includes capturing an image, recording a video, and/or altering the field of view of the one or more cameras (e.g., digital and/or analog zoom and/or changing between different cameras).

In some embodiments, the request to use the extension of the application is detected while the device is locked (e.g., in a locked state, such as operating with reduced functionality and/or functionality not requiring to be unlocked). In some embodiments, in response to detecting the request to use the extension of the application, the system process launches the extension of the device while the device is locked. In some embodiments, the extension is active (e.g., without the application being active) while the device is locked. In some embodiments, the extension of the application is terminated while the device is locked. In some embodiments, the extension of the application is terminated after the device is unlocked and/or in response to the device being unlocked.

In some embodiments, while the device is locked (e.g., in a locked state, such as operating with reduced functionality and/or functionality not requiring to be unlocked) and the extension of the application is executing, the system process receives, from the extension (e.g., via an Application Programming Interface (API) of the extension) of the application, a request to authenticate a user (e.g., a request for authentication of the user and/or a request to initiate an authentication process). In some embodiments, the extension of the application sends the request to authenticate the user to gain access to additional functionality (e.g., functionality requiring (1) the device to be unlocked, (2) full access to the device, and/or (3) a credential corresponding to the user), to transition to the application corresponding to the extension, and/or to unlock the device. In some embodiments, in response to receiving the request to authenticate the user, the system process initiates a process to authenticate the user. In some embodiments, initiating a process to authenticate the user includes querying a database of authenticated users, comparing the request to a set of one or more credentials, and/or requesting from another device and/or remote service to authenticate the user. In some embodiments, while the device is locked and the extension of the application is executing, the system process initiates the process to authenticate the user without detecting, from the extension of the application, a request to authenticate a user. In some embodiments, the system process is a first system process. In some embodiments, while the device is locked and the extension of the application is executing, the first system process receives, from a second system process different from the first system process, a request to authenticate the user (e.g., without the extension of the application requesting to authenticate a user). In some embodiments, in response to receiving the request to authenticate the user from the second system process, the first system process initiates the process to authenticate the user. In some embodiments, after authenticating the user, the system process unlocks the device. In some embodiments, unlocking the device includes requesting the device display an operating system user interface and/or requesting the device display a user interface corresponding to the application and/or the extension of the application. In some embodiments, unlocking the device includes maintaining display of a user interface of the extension. In some embodiments, unlocking the device includes requesting additional functionality be provided to the extension of the application (e.g., access to additional data already stored on the device and/or ability to save to one or more additional paths).

In some embodiments, while the device is unlocked (and/or in an unlocked state (e.g., operating with full functionality and/or functionality requiring a secure credential)), the system process detects (and/or receives) a third request to use (e.g., launch, run, execute, make active from being inactive, and/or provide focus to) the extension of the application (e.g., of the device and/or of another device different from the device) (e.g., a system application (and/or first party application and/or service), third party application, and/or application interface (e.g., an application stored remotely and/or a web based application)). In some embodiments, after detecting the third request to use the extension of the application (and/or in conjunction with the extension being active) (and/or without the application being active) (and/or in accordance with a determination that the device is unlocked) (and/or after the predefined period of time that the extension has been active), the system process enables execution of the extension of the application without determining whether the first set of one or more criteria is satisfied (and/or requiring that the first set of one or more criteria is not satisfied to not terminate the extension of the application) (e.g., as a result of the device being unlocked).

In some embodiments, the application is a first application (e.g., of one or more applications stored on the device and/or accessible by the device). In some embodiments, the request to use the extension of the application is detected while a second application (e.g., of the one or more applications stored on the device and/or accessible by the device), different from the first application, is a foreground application (e.g., in the foreground and/or an active application) of the device (and/or while displaying, via a display generation component that is in communication with the device, a user interface of the second application without displaying a user interface of the first application) (and/or while the first application is not a foreground application of the device) (and/or while the device is in a locked state or an unlocked state). In some embodiments, the display generation component is and/or includes a display screen, a projector, and/or a touch-sensitive display.

In some embodiments, the application is a first application (e.g., of one or more applications stored on the device and/or accessible by the device). In some embodiments, after (and/or while) detecting the request to use the extension of the first application, the system process detects (and/or receives) a request to use an extension of a third application (e.g., of the one or more applications stored on the device and/or accessible by the device) different from the first application. In some embodiments, the third application is different from the first application in type (e.g., system application, service, first party application, and/or third-party application). In some embodiments, the third application is different from the first application in location (e.g., location on the device, location on another device, and/or required steps to connect to the application). In some embodiments, the third application is different from the first application in functionality (e.g., requires use of a camera, speaker, microphone, and/or additional hardware components). In some embodiments, after detecting the request to use the extension of the third application and in accordance with a determination that a second set of one or more criteria is satisfied, wherein the second set of one or more criteria includes a criterion that is satisfied when the extension of the third application does not activate (and/or use) an operating system function (e.g., a process and/or function that uses a hardware component, such as a camera, a microphone, and/or a speaker, and/or hardware based functionality) within a predefined period of time (e.g., 3-10 seconds) (e.g., same as or different from the predefined period of time used for the first set of one or more criteria) of the extension of the third application being active (e.g., time since the request to use the extension, time since the extension was launched, and/or time since the extension last activated an operating system function), the system process terminates (e.g., closes, makes inactive, erases memory corresponding to, takes focus away, kills, and/or voids) the extension of the third application. In some embodiments, the second set of one or more criteria includes a criterion that is satisfied based on the request to use the extension of the third application (e.g., failed request, incomplete request, and/or not completable request). In some embodiments, the second set of one or more criteria includes a criterion that is satisfied when the operating system function is already in use. In some embodiments, terminating the extension of the third application depends on the request to use the extension of the third application (e.g., the location in memory to erase and/or the state to return the device to after terminating). In some embodiments, after detecting the request to use the extension of the third application and in accordance with a determination that the second set of one or more criteria is not satisfied, the system process forgoes termination of the extension of the third application.

In some embodiments, in conjunction with (e.g., before, while, in response to, after, and/or as part of) terminating the extension of the application, the system process erases memory (e.g., system memory, random access memory, cache, and/or storage used to store memory based data) allocated for (e.g., associated with, corresponding to, and/or defined for) the extension of the application (and/or from an instance of the extension of the application corresponding to a respective request). In some embodiments, erasing memory allocated for the extension of the application includes allowing a path associated with the memory to be used by additional instances of the extension of the application (e.g., a first memory location is erased and/or reused). In some embodiments, erasing memory allocated for the extension of the application includes erasing data at a location within memory associated with the extension of the application and/or the request (e.g., a unique path to a location within memory and/or storage provided to the extension of the application).

In some embodiments, after detecting the request to use the extension of the application, while the extension of the application is active, after the predefined period of time of the extension being active, and in accordance with the determination that the first set of one or more criteria is not satisfied (and/or after the extension of the application activates the operating system function), the system process detects (and/or receives) (e.g., via and/or from the application and/or the extension of the application) a request to terminate (e.g., close, make inactive, erase memory corresponding to, take focus away, kill, and/or void) the extension of the application (e.g., 305c). In some embodiments, the request to terminate the extension of the application includes an identifier corresponding to the extension of the application and/or an instance of the extension of the application. In some embodiments, the request to terminate the extension of the application corresponds to a currently active extension of the application and/or a most recently active extension of the application (e.g., the last extension of the application to activate the operating system function and/or to save data). In some embodiments, in response to detecting the request to terminate the extension of the application, the system process terminates the extension of the application (e.g., even though the extension of the application activated the operating system function within the predefined period of time of the extension being active).

In some embodiments, in conjunction with (e.g., before, while, in response to, after, and/or as part of) terminating the extension of the application in response to detecting the request to terminate the extension of the application, the system process erases memory (e.g., system memory, random access memory, cache, and/or storage used to store memory based data) allocated for (e.g., associated with, corresponding to, and/or defined for) the extension of the application (and/or from an instance of the extension of the application corresponding to a respective request). In some embodiments, erasing memory allocated for the extension of the application includes allowing a path associated with the memory to be used by additional instances of the extension of the application (e.g., a first memory location is erased and/or reused). In some embodiments, erasing memory allocated for the extension of the application includes erasing data at a location within memory associated with the extension of the application and/or the request (e.g., a unique path to a location within memory and/or storage provided to the extension of the application). In some embodiments, in conjunction with (e.g., before, while, in response to, after, and/or as part of) terminating the extension of the application in response to detecting the request to terminate the extension of the application, the system process forgoes erasing memory (e.g., system memory, random access memory, cache, and/or storage used to store memory based data) allocated for (e.g., associated with, corresponding to, and/or defined for) the extension of the application (and/or from an instance of the extension of the application corresponding to a respective request) when the extension is terminated via a request.

In some embodiments, the device is in communication with a display generation component (e.g., a display screen, a projector, and/or a touch-sensitive display). In some embodiments, in response to (and/or after) detecting the request to use the extension of the application, the system process launches the extension of the application. In some embodiments, launching the extension of the application includes providing the extension of the application one or more paths for saving data, limiting the extension of the application to the one or more paths, and/or activating one or more processes corresponding to the extension of the application (e.g., process to use one or more hardware components, such as storage, memory, a camera, a microphone, and/or a speaker). In some embodiments, in conjunction with launching the extension of the application, the system process displays, via the display generation component, a user interface (and/or a set of one or more user interface elements (and/or controls) within a user interface) of (e.g., corresponding to, assigned to, associated with, and/or obtained from) the extension of the application (e.g., 308). In some embodiments, the system process of the device requests the device display, via the display generation component, the user interface of the extension of the first application.

In some embodiments, the device is in communication with a display generation component (e.g., a display screen, a projector, and/or a touch-sensitive display). In some embodiments, after detecting the request to use the extension of the application and before the predefined period of time of the extension being active has expired, the system process displays, via the display generation component, a user interface (and/or a set of one or more user interface elements (and/or controls) within a user interface) of (e.g., corresponding to, assigned to, associated with, and/or obtained from) the operating system (and/or a user interface associated with a hardware component, such as a camera, a microphone, and/or a speaker) (e.g., 308), wherein display of the user interface corresponds to activating the operating system function (and/or causes the criterion to not be satisfied). In some embodiments, the system process of the device requests the device display, via the display generation component, the user interface of the operating system. In some embodiments, the user interface of the operating system includes a set of one or more functionalities usable by the extension of the application (e.g., a capture control to capture an image viewable in the user interface of the operating system (e.g., a camera user interface) and/or an exit control to terminate the extension of the application).

In some embodiments, after the extension is no longer executing (and/or no longer active) and while the application is executing (and/or while the application is active, such as displaying a user interface of the application), the system process receives (e.g., from the application) a request for one or more paths previously provided to the extension of the application. In some embodiments, the system process stores (and/or tracks) the one or more paths previously provided to the extension of the application. In some embodiments, the request for one or more paths previously provided to the extension of the application includes an identifier of the extension of the application and/or an identifier of the application (e.g., the system process uses the identifier to provide the one or more paths associated with the identifier). In some embodiments, in response to receiving the request for one or more paths previously provided to the extension of the application, the system process provides (and/or sends) (e.g., to the application) a first set of one or more paths. In some embodiments, the first set of one or more paths is a subset of a complete set of previously provided paths (e.g., all the paths provided to all extensions of all applications). In some embodiments, the first set of one or more paths does not include one or more paths voided by the application after the system process provided the one or more paths to the extension of the application. In some embodiments, the first set of one or more paths does not include a path provided after another request for one or more paths previously provided to the extension of the application was received and/or processed (e.g., only includes a path that was provided since last requested). In some embodiments, the first set of one or more paths are associated with the application. In some embodiments, the system process accesses a storage location and/or record associated with extension and/or the application to provide the paths previously provided to the extension of the application.

In some embodiments, after the extension is no longer executing (and/or no longer active) and while the application is executing (and/or while the application is active, such as a user interface of the application is being displayed), the system process receives (e.g., from the application) a request to invalidate a path (e.g., a path previously provided to the extension of the application). In some embodiments, the request to invalidate the path includes the path, an identifier of the application, and/or an identifier of the extension of the application (e.g., the system process uses the path and/or identifier to invalidate the path and/or the system process uses the path and/or identifier to determine if the application is allowed to invalidate the path). In some embodiments, in response to receiving the request to invalidate the path, the system process invalidates the path, wherein invalidating the path includes removing the path from a set of one or more paths available to be provided in response to a request for one or more paths (and/or previously provided to the extension of the application). In some embodiments, invalidating the path includes voiding, erasing, and/or removing data contained at the path. In some embodiments, invalidating the path includes storing the path in another location and/or database for another purpose (e.g., the system process reviewing contents of the path for security and/or privacy purposes).

Note that details of the processes described above with respect to method 400 (e.g., FIG. 4) are also applicable in an analogous manner to other methods described herein. For example, method 500 optionally includes one or more of the characteristics of the various methods described above with reference to method 400. For example, the first request to use the extension of the application of method 500 can be the request to use the extension of the application of method 400. For brevity, these details are not repeated herein.

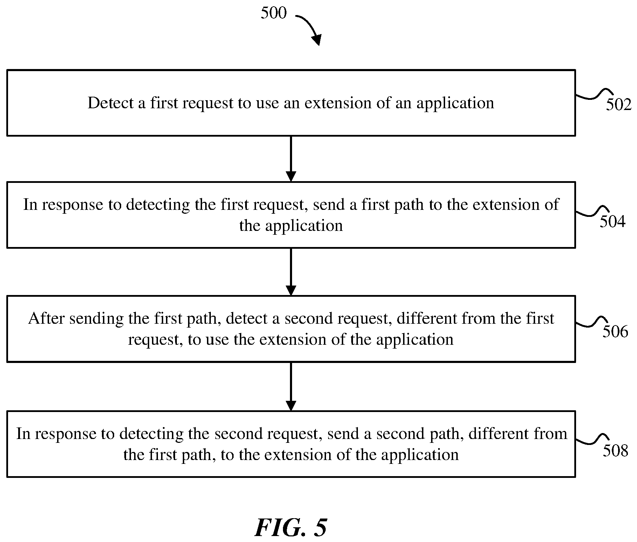

FIG. 5 is a flow diagram illustrating a method (e.g., method 500) for managing memory for an extension in accordance with some embodiments. Some operations in method 500 are, optionally, combined, the orders of some operations are, optionally, changed, and some operations are, optionally, omitted.

As described below, method 500 provides an intuitive way for managing memory for an extension. Method 500 reduces the cognitive burden on a user, thereby creating a more efficient human-machine interface. For battery-operated computing devices, enabling a user to interact with such devices faster and more efficiently conserves power and increases the time between battery charges.

In some embodiments, method 500 is performed at a system process (e.g., as described above with respect to method 400) of a device (e.g., a locked device, an unlockable device, and/or a personal device). In some embodiments, the device is a smart phone, a smart watch, a wearable device, a head-mounted-display (HMD) device, a laptop, a tablet, and/or a desktop computer. In some embodiments, the device is in communication with an input component (e.g., a camera, a depth sensor, a microphone, a hardware input mechanism, a rotatable input mechanism, a heart monitor, a temperature sensor, and/or a touch-sensitive surface) and/or an output component (e.g., a display generation component (e.g., a display screen, a projector, and/or a touch-sensitive display), an audio generation component (e.g., speaker, smart speaker, home theater system, soundbar, headphone, earphone, earbud, speaker, television speaker, augmented reality headset speaker, audio jack, optical audio output, Bluetooth audio output, and/or HDMI audio output), and/or a haptic generation device).

The system process detects (502) a first request (e.g., as described above with respect to the request of method 400) to use an extension (e.g., as described above with respect to method 400) of an application (e.g., as described above with respect to method 400) (e.g., a first instance of an extension of an application) (e.g., 305a). In some embodiments, the system process detects the first request to use the extension of the application while the device is locked.

In response to detecting the first request, the system process sends (504) a first path (e.g., a first file path, a first unique path, a memory location, and/or an identifier of a first container) to the extension of the application. In some embodiments, the first path includes a file path to a portion of storage instantiated for the extension of the application, a file path to a portion of storage within the application's instantiated storage (e.g., a location within storage that the application can access, a portion of storage set aside for the application, and/or dynamic storage allocated to the application as required), and/or a file path to a storage container (e.g., a portion of storage fixed in size and/or dynamically resized based on the requirements of the extension of the application and/or the application) instantiated for the application and/or the extension of the application. In some embodiments, the system process sends the first path to the extension of the application to separate the communication of content and/or data between the extension and the application. In some embodiments, the extension of the application cannot access storage outside of the first path as provided by the system process (e.g., system process controls the storage access of the extension).

After sending the first path (and/or after the extension of the application is terminated, closed, switched focus from, no longer executing, no longer running, and/or inactive), the system process detects (506) a second request (e.g., as described above with respect to the request of method 400), different (e.g., including different content and/or separate) from the first request, to use the extension of the application (e.g., a second instance of the extension of the application) (e.g., 305f). In some embodiments, the second request and the first request correspond to different instances of the extension of the application (e.g., separate uses of the extension of the same application). In some embodiments, the system process sends the first path and/or the second path to the extension of the application to provide the extension of the application with unique paths and/or location for the different instances and/or processes of the extension of the application to use.

In response to detecting the second request, the system process sends (508) a second path (e.g., a second file path, a second unique path, a memory location, and/or an identifier of a second container), different from the first path, to the extension of the application. In some embodiments, the second path includes a file path to a portion of storage instantiated for the extension of the application, a file path to a portion of storage within the application's instantiated storage (e.g., a location within storage that the application can access, a portion of storage set aside for the application, and/or dynamic storage allocated to the application as required), and/or a file path to a storage container (e.g., a portion of storage fixed in size and/or dynamically resized based on the requirements of the extension of the application and/or the application) instantiated for the application and/or the extension of the application. In some embodiments, the second path is different from the first path in location (e.g., sequential location with a portion of storage and/or dynamic allocation within a container), size (e.g., based on the content and/or data storage from the instance of the extension of the application), and/or access (e.g., corresponding to the instance of the extension of the application, the request by the application, and/or a period of time). In some embodiments, the extension of the application cannot access the data and/or content of the storage at the first path after requesting the second path (e.g., the system process stops the extension of the application from access content and/or data from previous instances of the extension of the application).

In some embodiments, in conjunction with (e.g., in response to, before, while, and/or after) detecting the first request, the system process generates (and/or creates) the first path. In some embodiments, generating the first path includes accessing storage associated with the application, reviewing the storage for open, valid, and/or uninitiated locations within the storage, and providing a path to the location within the storage. In some embodiments, the storage associated with the first path is general storage of the device (and/or not associated with an application) and/or storage (and/or a container) allocated for the application. In some embodiments, the storage is dynamic and generating the first path includes expanding a container associated with the application to create a new location for the first path. In some embodiments, generating the first path includes creating a directory and/or folder with and/or at the first path. In some embodiments, in conjunction with (e.g., in response to, before, while, and/or after) detecting the second request, the system process generates (and/or creates) the second file path. In some embodiments, generating the second path includes accessing storage associated with the application, reviewing the storage for open, valid, and/or uninitiated locations within the storage, and providing a path to the location within the storage. In some embodiments, the storage associated with the second path is general storage of the device (and/or not associated with an application) and/or storage (and/or a container) allocated for the application. In some embodiments, the storage is dynamic and generating the second path includes expanding a container associated with the application to create a new location for the second path. In some embodiments, generating the second path includes creating a directory and/or folder with and/or at the second path.

In some embodiments, the first path corresponds to (e.g., is directed to and/or is) a first location (and/or a first index) (e.g., 324a) within a container (and/or storage container) (e.g., 324) of the application. In some embodiments, the second path corresponds to (e.g., is directed to and/or is) a second location (and/or a second index) (e.g., 324b), different from the first location, within the container of the application. In some embodiments, the container of the application is a set of storage locations allocated for the application, a block of storage allocated for the application, and/or a dynamically sized allocation of storage for the application. In some embodiments, the first location and/or the second location corresponds to indexes with the container and/or associated with the container. In some embodiments, the first location and/or the second location is sequential within the container, dynamic within the container (e.g., the second location within the container is sufficiently away from the first location to allow for the extension of the application to store data), and/or randomly defined within the container.

In some embodiments, the first path corresponds to (e.g., is directed to and/or is) a first location (e.g., 324a) outside of a container (and/or storage container) (e.g., 322) of (e.g., corresponding to, allocated for, and/or associated with) the extension of the application. In some embodiments, the second path corresponds to (e.g., is directed to and/or is) a second location (e.g., 324b), different from the first location, outside of the container (and/or storage container) of (e.g., corresponding to, allocated for, and/or associated with) the extension of the application. In some embodiments, the container of the extension of the application is within the container of the application. In some embodiments, the container of the extension of application is a set of storage locations allocated for the extension of the application, a block of storage allocated for extension of the application, and/or a dynamically sized allocation of storage for the extension of the application. In some embodiments, the first location and/or the second location corresponds to indexes with a container and/or associated with a container. In some embodiments, the first location and/or the second location is sequential within a container, dynamic within a container (e.g., the second location within a container is sufficiently away from the first location to allow for the extension of the application to store data), and/or randomly defined within a container.

In some embodiments, in response to detecting the first request (e.g., after and/or while sending the first path), the system process executes (e.g., activates and/or initiates) the extension of the application (e.g., as described above with respect to method 400). In some embodiments, while the extension of the application is executing in response to detecting the first request (e.g., while the device is in a locked state), the system process restricts (e.g., disables, does not allow, and/or does not afford) the extension of the application from accessing memory (and/or storage) outside of the container of the extension and the first path (e.g., enables, allows, and/or affords the extension of the application access to memory (and/or storage) within the container of the extension and the first path) (e.g., the extension of the application does not have access to memory corresponding to the second path while being restricted from accessing memory (and/or storage) outside of the container of the extension and the first path). In some embodiments, allowing the extension of the application access to the first path includes forwarding and/or directing requests, by the extension of the application, to store data to the first path. In some embodiments, while the extension of the application is executing in response to detecting the second request (e.g., while the device is in a locked state), the system process restricts (e.g., disables, does not allow, and/or does not afford) the extension of the application from accessing memory (and/or storage) outside of the container of the extension and the second path (e.g., enables, allows, and/or affords the extension of the application access to memory (and/or storage) within the container of the extension and the second path) (e.g., the extension of the application does not have access to memory corresponding to the first path while being restricted form accessing memory (and/or storage) outside of the container of the extension and the second path). In some embodiments, while the extension of the application is executing in response to detecting the first request and while the device is in a locked state, the system process detects that the device transitions (and/or is transitioning) to an unlocked state. In some embodiments, in response to detecting that the device transitions (and/or is transitioning) to an unlocked state, the system process enables the extension of the application access to memory (and/or storage) outside of the container of the extension and the first path (e.g., memory corresponding to the application and/or within a container of the application).

In some embodiments, the device is locked (e.g., in a locked state, such as operating with reduced functionality and/or functionality not requiring a secure credential) while the first request (and/or the second request) is detected and while the first path (and/or the second path) is sent to the extension of the application (and/or while the extension is executing and/or launched). In some embodiments, in response to detecting the first request (and/or the second request), the system process launches (e.g., activates, initiates a process of, and/or requests the device to display a user interface of) the extension of the application while the device remains locked. In some embodiments, launching the extension of the application includes limiting the extension of the application to (1) accessing memory corresponding to a container of the extension, the first path, and/or the second path and/or (2) activating one or more processes corresponding to the application and/or the extension of the application. In some embodiments, launching the extension of the application includes initiating a process to use one or more hardware components (e.g., storage, memory, a camera, a microphone, and/or a speaker).

In some embodiments, while the device is unlocked (and/or in an unlocked state (e.g., operating with full functionality and/or functionality requiring a secure credential)), the system process detects a third request (e.g., the same as or different from the first request and/or the second request) (e.g., as described above with respect to the request of method 400) to use the extension of the application. In some embodiments, while the device is unlocked, in response to detecting the fourth request (and/or while the device is unlocked), the system process launches the extension of the application without providing a path to the extension of the application (e.g., as a result of the device being unlocked instead of locked) (and/or without limiting the extension of the application to access memory corresponding to the container of the extension and a file path generated and/or provided by the system process). In some embodiments, while the device is unlocked, launching the extension of the application includes activating one or more processes corresponding to the extension of the application. In some embodiments, launching the extension of the application includes initiating a process to use one or more hardware components (e.g., storage, memory, a camera, a microphone, and/or a speaker). In some embodiments, while the device is unlocked, launching the extension of the application includes not limiting the extension of the application to one or more file paths and/or to a container of the application and/or a container of the extension of the application.

In some embodiments, after launching the extension of the application (and/or while executing the extension of the application) (and/or while the extension of the application is active) while the device is locked (and/or in a locked state, such as operating with reduced functionality and/or functionality not requiring a secure credential), the system process receives, from the extension of the application (e.g., via an Application Programming Interface (API)), a request to authenticate a user. In some embodiments, the extension of the application sends the request to authenticate the user to gain access to additional functionality (e.g., functionality requiring full access to the device and/or functionality requiring a credential corresponding to the user), to transition to the application corresponding to the extension, and/or to unlock the device. In some embodiments, after launching the extension of the application while the device is locked, in response to receiving the request to authenticate the user, the system process initiates a process to authenticate the user. In some embodiments, initiating a process to authenticate the user includes querying a database of authenticated users, comparing the request to a set of one or more credentials, and/or requesting from another device and/or remote service to authenticate the user.In some embodiments, in response to authenticating the user, the system process unlocks the device. In some embodiments, unlocking the device includes requesting the device display an operating system user interface, requesting the device display a user interface corresponding to the application, and/or requesting additional functionality be provided to the extension of the application (e.g., access to additional data already stored on the device and/or ability to save to additional paths).

In some embodiments, the application is a first application (e.g., of one or more applications stored on the device and/or accessible by the device). In some embodiments, the first request (and/or the second request) to use the extension of the application is detected while a second application (e.g., of the one or more applications stored on the device and/or accessible by the device), different from the first application, is a foreground application (e.g., in the foreground and/or an active application) of the device (and/or while displaying, via a display generation component that is in communication with the device, a user interface of the second application without displaying a user interface of the first application) (and/or while the first application is not a foreground application of the device) (and/or while the device is in a locked state or an unlocked state). In some embodiments, the display generation component is and/or includes a display screen, a projector, and/or a touch-sensitive display.

In some embodiments, after sending the first path (and/or the second path), the system process terminates the extension of the application (e.g., in response to a set of criteria being satisfied (e.g., as described above with respect to method 400 and the first set of one or more criteria) and/or detecting a request to terminate (e.g., close, make inactive, erase memory corresponding to, take focus away, kill, and/or void) the extension of the application). In some embodiments, the system process terminates the extension of the application by closing the extension, ending one or more processes corresponding to the extension, removing a connection of the extension and/or removing an ability of the extension to communicate with one or more hardware components (e.g., camera, microphone, speaker, memory, and/or storage). In some embodiments, in conjunction with (e.g., before, while, in response to, after, and/or as part of) terminating the extension of the application, the system process erases memory (e.g., system memory, random access memory, cache, and/or storage used to store memory based data) allocated for (e.g., associated with, corresponding to, and/or defined for) the extension of the application (and/or from an instance of the extension of the application corresponding to a respective request). In some embodiments, erasing memory allocated for the extension of the application includes allowing a path associated with the memory to be used by additional instances of the extension of the application (e.g., a first memory location is erased and/or reused). In some embodiments, erasing memory allocated for the extension of the application includes erasing data at a location within memory associated with the extension of the application and/or the request (e.g., a unique path to a location within memory and/or storage provided to the extension of the application).

In some embodiments, the device is in communication with a display generation component (e.g., a display screen, a projector, and/or a touch-sensitive display). In some embodiments, in response to (and/or after) detecting the request to use the extension of the application (and/or after and/or while sending the first path and/or the second path), the system process launches the extension of the application. In some embodiments, launching the extension of the application includes providing the extension of the application one or more paths for saving data, limiting the extension of the application to the one or more paths, and/or activating one or more processes corresponding to the extension of the application. In some embodiments, launching the extension of the application includes initiating a process to use one or more hardware components (e.g., storage, memory, a camera, a microphone, and/or a speaker). In some embodiments, in conjunction with launching the extension of the application, the system process displays, via the display generation component, a user interface (and/or a set of one or more user interface elements (and/or controls) within a user interface) (e.g., 308) of (e.g., corresponding to, assigned to, associated with, and/or obtained from) the extension of the application. In some embodiments, the system process of the device requests the device display, via the display generation component, the user interface of the extension of the first application.

In some embodiments, the device is in communication with a display generation component (e.g., a display screen, a projector, and/or a touch-sensitive display). In some embodiments, in response to (and/or after) detecting the request to use the extension of the application (after and/or while sending the first path and/or the second path), the system process launches the extension of the application. In some embodiments, launching the extension of the application includes providing the extension of the application one or more paths for saving data, limiting the extension of the application to the one or more paths, and/or activating one or more processes corresponding to the extension of the application. In some embodiments, launching the extension of the application includes initiating a process to use one or more hardware components (e.g., storage, memory, a camera, a microphone, and/or a speaker). In some embodiments, in conjunction with launching the extension of the application, the system process displays, via the display generation component, a user interface (and/or a set of one or more user interface elements (and/or controls) within a user interface) (e.g., 308) of (e.g., corresponding to, assigned to, associated with, and/or obtained from) the operating system (and/or a user interface associated with a hardware component, such as a camera, a microphone, and/or a speaker). In some embodiments, the system process of the device requests the device display, via the display generation component, the user interface of the operating system. In some embodiments, the user interface of the operating system includes a set of one or more functionalities usable by the extension of the application (e.g., a capture control to capture an image viewable in the user interface of the operating system (e.g., a camera user interface) and/or an exit control to terminate the extension of the application).

In some embodiments, the extension stores data (e.g., 322a) using (and/or in) the first path after the system process sends the first path and before the system process detects the second request. In some embodiments, the extension stores data using (and/or in) the second path after the system process sends the second path.

In some embodiments, the extension stores data (e.g., 322a) using (and/or in and/or at) a container of the extension (e.g., instead of the first path) after the system process sends the first path and before the system process detects the second request. In some embodiments, the container of the extension is separate (and/or different) from the first path. In some embodiments, the extension stores data using (and/or in) the container of the extension after the system process sends the second path.

In some embodiments, the application is a first application. In some embodiments, the first path corresponds to the first application (e.g., a container of the first application). In some embodiments, the system process detects a request (e.g., as described above with respect to the request of method 400) to use an extension (e.g., as described above with respect to method 400) of a second application (e.g., as described above with respect to method 400) different from the first application. In some embodiments, the system process detects the request to use the extension of the second application while the device is locked. In some embodiments, in response to detecting the request to use the extension of the second application, the system process sends a third path, different from the first path and the second path, to the extension of the second application, wherein the third path corresponds to the second application (e.g., a container of the second application and not the container of the first application). In some embodiments, the third path does not correspond to the first application. In some embodiments, the third path corresponds to a storage location allocated for the second application (e.g., a container of the second application and/or a set of paths in use by the second application).

In some embodiments, after detecting the second request and while the extension of the application is executing in response to detecting the second request (e.g., while the device is in a locked state), the system process restricts (e.g., disables, does not allow, and/or does not afford) the extension of the application from accessing memory (and/or storage) outside of a container of the extension and the second path (e.g., enables, allows, and/or affords the extension of the application access to memory (and/or storage) within the container of the extension and the second path) (e.g., the extension of the application does not have access to memory corresponding to the first path while being restricted from accessing memory (and/or storage) outside of the container of the extension and the second path). In some embodiments, allowing the extension of the application access to the second path includes forwarding and/or directing requests, by the extension of the application, to store data to the second path. In some embodiments, while the extension of the application is executing in response to detecting the second request and while the device is in a locked state, the system process detects that the device transitions (and/or is transitioning) to an unlocked state. In some embodiments, in response to detecting that the device transitions (and/or is transitioning) to an unlocked state, the system process enables the extension of the application access to memory (and/or storage) outside of the container of the extension and the second path (e.g., memory corresponding to the application and/or within a container of the application).

In some embodiments, after the extension is no longer executing (and/or no longer active) and while the application is executing (and/or while the application is active, such as displaying a user interface of the application), the system process receives (e.g., from the application) a request for one or more paths previously provided to the extension of the application. In some embodiments, the system process stores (and/or tracks) the one or more paths previously provided to the extension of the application. In some embodiments, the request for one or more paths previously provided to the extension of the application includes an identifier of the extension of the application and/or an identifier of the application (e.g., the system process uses the identifier to provide the one or more paths associated with the identifier). In some embodiments, in response to receiving the request for one or more paths previously provided to the extension of the application, the system process provides (and/or sends) (e.g., to the application) a first set of one or more paths. In some embodiments, the first set of one or more paths is a subset of a complete set of previously provided paths (e.g., all the paths provided to all extensions of all applications). In some embodiments, the first set of one or more paths does not include one or more paths voided by the application after the system process provided the one or more paths to the extension of the application. In some embodiments, the first set of one or more paths does not include a path provided after another request for one or more paths previously provided to the extension of the application was received and/or processed (e.g., only includes a path that was provided since last requested). In some embodiments, the first set of one or more paths are associated with the application. In some embodiments, the system process accesses a storage location and/or record associated with extension and/or the application to provide the paths previously provided to the extension of the application.

In some embodiments, after the extension is no longer executing (and/or no longer active) and while the application is executing (and/or while the application is active, such as displaying a user interface of the application), the system process receives (e.g., from the application) a request to invalidate a path (e.g., a path previously provided to the extension of the application). In some embodiments, the request to invalidate the path includes the path, an identifier of the application, and/or an identifier of the extension of the application (e.g., the system process uses the path and/or identifier to invalidate the path and/or the system process uses the path and/or identifier to determine if the application is allows to invalidate the path). In some embodiments, in response to receiving the request to invalidate the path, the system process invalidates the path, wherein invalidating the path includes removing the path from a set of one or more paths available to be provided in response to a request for one or more paths (and/or previously provided to the extension of the application). In some embodiments, invalidating the path includes voiding, erasing, and/or removing data contained at the path. In some embodiments, invalidating the path includes storing the path in another location and/or database for another purpose (e.g., the system process reviewing contents of the path for security and/or privacy purposes).

Note that details of the processes described above with respect to method 500 (e.g., FIG. 5) are also applicable in an analogous manner to other methods described herein. For example, method 600 optionally includes one or more of the characteristics of the various methods described above with reference to method 500. For example, the first path of method 600 can be the first path or the second path of method 500. For brevity, these details are not repeated herein.

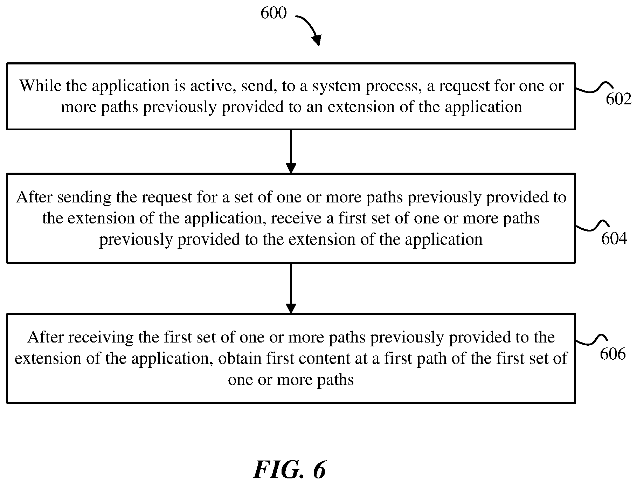

FIG. 6 is a flow diagram illustrating a method (e.g., method 600) for obtaining a memory location provided to an extension in accordance with some embodiments. Some operations in method 600 are, optionally, combined, the orders of some operations are, optionally, changed, and some operations are, optionally, omitted.

As described below, method 600 provides an intuitive way for obtaining a memory location provided to an extension. Method 600 reduces the cognitive burden on a user, thereby creating a more efficient human-machine interface. For battery-operated computing devices, enabling a user to interact with such devices faster and more efficiently conserves power and increases the time between battery charges.

In some embodiments, method 600 is performed at an application (e.g., as described above with respect to method 400 and/or method 500) of a device (e.g., a locked device, an unlockable device, and/or a personal device). In some embodiments, the device is a smart phone, a smart watch, a wearable device, a head-mounted-display (HMD) device, a laptop, a tablet, and/or a desktop computer. In some embodiments, the device is in communication with an input component (e.g., a camera, a depth sensor, a microphone, a hardware input mechanism, a rotatable input mechanism, a heart monitor, a temperature sensor, and/or a touch-sensitive surface) and/or an output component (e.g., a display generation component, an audio generation component, and/or a haptic generation device).

While the application is active (and/or after an extension of the application has been active while the application was not active, such as when the device was in a locked state) (e.g., a system application, a third party application, and/or a remote application), the application sends (602), to a system process (e.g., as described above with respect to method 400 and/or method 500), a request for one or more paths previously provided to an extension of the application (and/or one or more paths from and/or previously used by the extension of the application). In some embodiments, the application being active includes the application currently running a process and/or background process on the device (e.g., updating data, content, and/or a state of the application), the application in a background state (e.g., receiving communications and/or alerts from a process but not initiating a process), the application issuing alerts and/or listening for events from other processes, and/or the application not being closed and/or terminated.

After sending the request for one or more paths previously provided to the extension of the application, the application receives (604), from the system process, a first set of one or more paths previously provided to the extension of the application. In some embodiments, a path of the first set of one or more paths previously provided to the extension includes a storage location previously used and/or assigned to the extension of the application, a portion of storage within allotted storage (e.g., a dynamically allocated portion of storage) for the application, the extension, a container of the application, and/or a container of the extension, and/or a container previously used and/or assigned to the extension of the application. In some embodiments, a path of the first one or more paths corresponds to a previous instance of the extension of the application (e.g., using a different path for each different instance of the extension of the application). In some embodiments, a path of the first set of one or more paths corresponds to a single instance of the extension of the application (e.g., using different paths for different types of content).

After (and/or in response to) receiving the first set of one or more paths previously provided to the extension of the application, the application obtains (606) first content at a first path of the first set of one or more paths. In some embodiments, the first path is a unique identifier corresponding to a previous instance of the extension of the application, a unique identifier corresponding to the application, a unique identifier corresponding to the extension, and/or a value corresponding to a type of content being requested by the application. In some embodiments, the first path corresponds to a storage location assigned by the system process to the extension of the application and/or a first instance of the extension of the application. In some embodiments, the first path corresponds to a most recently used path (e.g., corresponding to a most recently launched extension of the application). In some embodiments, the first set of one or more paths correspond to a list of one or more previous paths used by the extension of the application. In some embodiments, the first path is first in the list (e.g., numerically sorted by memory location, sorted by access time, and/or sorted by metadata from content stored at the one or more paths). In some embodiments, the first content corresponds to content and/or data stored by the extension of the application during execution of the extension (e.g., picture content taken and stored during an instance of a camera extension and/or metadata recorded during the instance of a camera and/or video extension). In some embodiments, the first content corresponds to content stored by the extension of the application, most recently stored content from the extension, and/or content stored at a first storage location (e.g., based on an index of the storage and/or allocation). In some embodiments, after and/or in response to obtaining the first content, the application performs an operation using the first content. In some embodiments, the device is in communication with a display generation component (e.g., a display screen, a projector, and/or a touch-sensitive display). In some embodiments, after and/or in response to obtaining the first content, the application displays, via the display generation component, the first content.

In some embodiments, the request for one or more paths provided to the extension of the application is a first request. In some embodiments, while the application is active (and/or after an extension of the application has been active while the application was not active, such as when the device was in a locked state), the application sends, to the system process, a second request, separate (and/or different) from the first request, for one or more paths previously provided to the extension of the application (and/or one or more paths from and/or previously used by the extension of the application). In some embodiments, after sending the second request for one or more paths previously provided to the extension of the application, the application receives, from the system process, the first set of one or more paths previously provided to the extension of the application.

In some embodiments, while the application is active (and/or after an extension of the application has been active while the application was not active, such as when the device was in a locked state), the application sends, to the system process, a third request, separate (and/or different) from the first request, for one or more paths previously provided to the extension of the application (and/or one or more paths from and/or previously used by the extension of the application). In some embodiments, after sending the third request for one or more paths previously provided to the extension of the application (and/or in accordance with a determination that the application has previously received at least a portion of the first set of one or more paths), the application receives, from the system process, a second set of one or more paths, different from the first set of one or more paths, previously provided to the extension of the application. In some embodiments, the second set of one or more paths does not includes the first set of one or more paths. In some embodiments, the second set of one or more paths does not include the portion of the first set of one or more paths. In some embodiments, the second set of one or more paths does not include a path previously provided to the application in response to a request for one or more paths previously provided to the extension of the application. In some embodiments, the second set of one or more paths does not include a path previously voided by the application. In some embodiments, the system process determines that the application has previously received the first set of one or more paths. In some embodiments, the first set of one or more paths and the second set of one or more paths are different due to corresponding to different instances of the extension of the application, corresponding to different requests to use the extension of the application (e.g., as described above in method 400 and/or method 500), and/or corresponding to different locations within the same and/or different container and/or storage location (e.g., the first set of one or more paths are within a container of the application and/or the extension of the application and the second set of one or more paths is not within the container of the application and/or extension of the application).

In some embodiments, the application sends, to the system process, a request to invalidate a second path of the first set of one or more paths. In some embodiments, the request to invalidate the second path includes the second path, an identifier of the second path, an identification of the application, and/or an identifier of the extension of the application that was previously provided the second path. In some embodiments, in response to receiving the request to invalidate the second path of the first set of one or more paths, the system process removes the second path from a list of file paths previously provided to the extension of the application and/or the first set of one or more paths and/or invalidates a storage location corresponding to the second path. In some embodiments, after sending the request to invalidate the second path of the first set of one or more paths, the application sends, to the system process, a fourth request, separate (and/or different) from the first request, for one or more paths previously provided to the extension of the application. In some embodiments, after sending the fourth request, the application receives, from the system process, a third set of one or more paths that does not include the second path. In some embodiments, the third set of one or more paths is the first set of one or more paths without the second path. In some embodiments, the third set of one or more paths is different from the first set of one or more paths. In some embodiments, the third set of one or more paths is a subset of paths from the first set of one or more paths.

In some embodiments, at the extension of the application (e.g., as described above with respect to method 400 and/or method 500), in conjunction with being launched (e.g., activated and/or initiated) (and/or before the application sends the request for one or more paths previously provided to the extension of the application), the extension receives, from the system process, a third path (e.g., the first path and/or another path different from the first path) of the first set of one or more paths. In some embodiments, the third path is a next path in a sequence of paths continuing after a previous path. In some embodiments, the previous path is included in the first set of one or more paths. In some embodiments, the previous path is not included in the first set of one or more paths. In some embodiments, the system process provides the third path to the extension of the application prior to the extension of the application completely launching. In some embodiments, the extension of the application is unable to access storage and/or memory until the extension of the application receives the third path.

In some embodiments, the extension of the application is restricted from accessing (and/or unable to access) a location within a container of the application except for (and/or outside of) the third path (and/or a location within a container of the extension) in conjunction with (e.g., after but in the same session) receiving the third path. In some embodiments, the system process denies the extension of the application access to the location within the container of the application to enforce the extension of the application's limited access to storage (e.g., each instance of the extension of the application is limited to a container of the extension and/or a set of one or more file paths provided to the instance). In some embodiments, the system process denies the extension of the application access by redirecting the extension of the application to the third path, terminating the extension of the application, and/or not responding to the extension of the application's request.

In some embodiments, the third path is generated (and/or created) (e.g., by the system process) in conjunction with launching (e.g., activating and/or initiating a process for) the extension of the application. In some embodiments, generating the third path includes accessing storage associated with the application, reviewing the storage for open, valid, and/or uninitiated locations within the storage, and providing a path to the location within the storage. In some embodiments, the storage associated with the third path is general storage of the device (and/or not associated with an application) and/or storage (and/or a container) allocated for the application. In some embodiments, the storage is dynamic and generating the third path includes expanding a container associated with the application to create a new location for the third path. In some embodiments, generating the first path includes creating a directory and/or folder with and/or at the first path.

In some embodiments, the third path is received while the device is locked (and/or in a locked state, such as operating with reduced functionality and/or functionality not requiring a secure credential). In some embodiments, while the device is locked, the system process provides the third path of the first set of one or more paths to the extension of the application to limit access of the extension of the application to a container of the extension and/or the third path (e.g., each instance of the extension of the application being limited to the container of the extension and/or a file path).

In some embodiments, at the extension of the application, while the extension of the application is active, the extension stores (e.g., writes to a storage hardware component, initiates a process to store, and/or requests that the device store) data (e.g., first content) using (and/or in and/or at) the third path of the first set of one or more paths.

In some embodiments, while the application of the device is active (e.g., executing), the application accesses the data stored using the third path of the first set of one or more paths (e.g., by the extension of the application). In some embodiments, accessing the data includes copying the data to another location and/or memory, saving the data to a permanent location and/or location associated with the application, and/or copying the data to a remote location (e.g., cloud storage, another device, and/or a server associated with the application).

In some embodiments, at the extension of the application, while the device is locked (and/or in a locked state, such as operating with reduced functionality and/or functionality not requiring a secure credential), the extension sends, via an Application Programming Interface (API), a request to authenticate a user (and/or a request for an authentication credential corresponding to a user). In some embodiments, the extension of the application sends the request to authenticate the user to gain access to additional functionality (e.g., functionality requiring full access to the device and/or functionality requiring a credential corresponding to the user), to transition to the application corresponding to the extension, and/or to unlock the device. In some embodiments, at the extension of the application, after sending the request to authenticate the user (and/or in accordance with a determination that the user was properly authenticated), the extension receives an indication that the device is unlocked. In some embodiments, at the extension of the application, after receiving the indication that the device is unlocked, the extension performs an operation that is not accessible while the device is locked. In some embodiments, in response to receiving the indication that the device is unlocked, the extension of the application causes the application to execute and/or become a foreground application. In some embodiments, after receiving the indication that the device is unlocked, the application performs the operation instead of the extension of the application.

In some embodiments, the request for one or more paths previously provided to the extension of the application is sent after (and/or in response to) receiving the indication that the device is unlocked (and/or while the device is unlocked).

In some embodiments, after obtaining the first content, the application stores at least a portion of the first content at a location (e.g., a server and/or a remote storage device) remote from the device. In some embodiments, storing the portion of the first content at location includes requesting a storage location at the location (e.g., a path to a storage location), requesting the portion of the first content be copied and/or moved to the location, and/or receiving a confirmation that the portion of the first content is copied to and/or moved to the location.

Note that details of the processes described above with respect to method 600 (e.g., FIG. 6) are also applicable in an analogous manner to the methods described herein. For example, method 400 optionally includes one or more of the characteristics of the various methods described herein with reference to method 600. For example, the operating system function of method 400 can be used to capture the first content of method 600. For brevity, these details are not repeated herein.

In some embodiments, one or more of methods 400, 500, and 600 (FIGS. 4, 5, and 6) is performed at a first computer system (as described herein) via a system process (e.g., an operating system process) that is different from one or more applications executing and/or installed on the first computer system.

In some embodiments, one or more of methods 400, 500, and 600 (FIGS. 4, 5, and 6) is performed at a first computer system (as described herein) by an application that is different from a system process. In some embodiments, the instructions of the application, when executed, control the first computer system to perform one or more of methods 400, 500, and 600 (FIGS. 4, 5, and 6) by calling an application programming interface (API) provided by the system process. In some embodiments, the application performs at least a portion of one or more of methods 400, 500, and 600 (FIGS. 4, 5, and 6) without calling the API. In some embodiments, the application can be any suitable type of application, including, for example, one or more of: a browser application, a super-app that functions as an application execution environment for plug-ins, widgets or other applications, a fitness application, a health application, a digital payments application, a media application, a social network application, a messaging application, and/or a maps application. In some embodiments, the application is an application that is pre-installed on the first computer system at purchase (e.g., a first party application). In other embodiments, the application is an application that is provided to the first computer system via an operating system update file (e.g., a first party application). In other embodiments, the application is an application that is provided via an application store. In some implementations, the application store is pre-installed on the first computer system at purchase (e.g., a first party application store) and allows download of one or more applications. In some embodiments, the application store is a third party application store (e.g., an application store that is provided by another device, downloaded via a network, and/or read from a storage device). In some embodiments, the application is a third party application (e.g., an app that is provided by an application store, downloaded via a network, and/or read from a storage device). In some embodiments, the application controls the first computer system to perform one or more of methods 400, 500, and 600 (FIGS. 4, 5, and 6) by calling an application programming interface (API) provided by the system process using one or more parameters. In some embodiments, exemplary APIs provided by the system process include one or more of: a Pairing API (e.g., for establishing secure connection, e.g., with an accessory), a Device detection API (e.g., for locating nearby devices, e.g., Apple TVs, other iPhones), a UIKit API (e.g., for generating user interfaces), a Location Detection API, a FindMy API, a Maps API, a Health Sensor API, a Sensor API, a Messaging API, a Push Notification API, a Streaming API, a collaboration API, a video conferencing API (e.g., FaceTime/SharePlay API), a web browser API (e.g., WebKit API), a CarPlay API, a Networking API, a WiFi API, a Bluetooth API, an NFC API, a UWB API, a Fitness API, a HomeKit API, NameDrop API, Photos API, Camera API, and/or an Image Processing API. In some embodiments, at least one API is a software module (e.g., a collection of computer-readable instructions) that provides an interface that allows a different module (e.g., API calling module) to access and use one or more functions, methods, procedures, data structures, classes, and/or other services provided by an OS implementation module of the system process. The API can define one or more parameters that are passed between the API calling module and the OS implementation module. The OS implementation module is an operating system software module (e.g., a collection of computer-readable instructions) that is constructed to perform an operation in response to receiving an API call via the API. In some embodiments, the OS implementation module is constructed to provide an API response (via the API) as a result of processing an API call.

The foregoing description, for purpose of explanation, has been described with reference to specific examples. However, the illustrative discussions above are not intended to be exhaustive or to limit the disclosure to the precise forms disclosed. Many modifications and variations are possible in view of the above teachings. The examples were chosen and described in order to best explain the principles of the techniques and their practical applications. Others skilled in the art are thereby enabled to best utilize the techniques and various examples with various modifications as are suited to the particular use contemplated.

Although the disclosure and examples have been fully described with reference to the accompanying drawings, it is to be noted that various changes and modifications will become apparent to those skilled in the art. Such changes and modifications are to be understood as being included within the scope of the disclosure and examples as defined by the claims.

As described above, one aspect of the present technology is the gathering and use of data available from various sources to improve how a user can interact with a device. The present disclosure contemplates that in some instances, this gathered data can include personal information data that uniquely identifies or can be used to contact or locate a specific person. Such personal information data can include demographic data, location-based data, telephone numbers, email addresses, home addresses, or any other identifying information.

The present disclosure recognizes that the use of such personal information data, in the present technology, can be used to the benefit of users. For example, the personal information data can be used to change how a user interacts with a device. Accordingly, use of such personal information data enables better user interactions. Further, other uses for personal information data that benefit the user are also contemplated by the present disclosure.

The present disclosure further contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. For example, personal information from users should be collected for legitimate and reasonable uses of the entity and not shared or sold outside of those legitimate uses. Further, such collection should occur only after receiving the informed consent of the users. Additionally, such entities would take any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of image capture, the present technology can be configured to allow users to select to "opt in" or "opt out" of participation in the collection of personal information data during registration for services.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data.

"Exemplary methods, devices, electronic devices, and non-transitory computer-readable storage media are set out in the following items."
1. A method, comprising:
   at a system process of a device:
   detecting a request to use an extension of an application; and
   after detecting the request to use the extension of the application:
      in accordance with a determination that a first set of one or more criteria is satisfied, wherein the first set of one or more criteria includes a criterion that is satisfied when the extension of the application does not activate an operating system function within a predefined period of time of the extension being active, terminating the extension of the application; and
      in accordance with a determination that the first set of one or more criteria is not satisfied, forgoing termination of the extension of the application.
2. The method of item 1, wherein the system process of the device is in communication with a hardware component, and wherein activation, via the extension of the application, of the operation system function includes activation of the hardware component.
3. The method of item 2, wherein the hardware component is a camera.
4. The method of any one of items 1-3, wherein the request to use the extension of the application is detected while the device is locked, the method further comprising:
   in response to detecting the request to use the extension of the application, launching the extension of the device while the device is locked.
5. The method of item 4, further comprising:
   while the device is locked and the extension of the application is executing, receiving, from the extension of the application, a request to authenticate a user;
   in response to receiving the request to authenticate the user, initiating a process to authenticate the user; and
   after authenticating the user, unlocking the device.
6. The method of any one of items 1-5, further comprising:
   while the device is unlocked, detecting a third request to use the extension of the application;
   after detecting the third request to use the extension of the application, enabling execution of the extension of the application without determining whether the first set of one or more criteria is satisfied.
7. The method of any one of items 1-6, wherein the application is a first application, and wherein the request to use the extension of the application is detected while a second application, different from the first application, is a foreground application of the device.
8. The method of any one of items 1-7, wherein the application is a first application, the method further comprising:
   after detecting the request to use the extension of the first application, detecting a request to use an extension of a third application different from the first application; and
   after detecting the request to use the extension of the third application and in accordance with a determination that a second set of one or more criteria is satisfied, wherein the second set of one or more criteria includes a criterion that is satisfied when the extension of the third application does not activate an operating system function within a predefined period of time of the extension of the third application being active, terminating the extension of the third application.
9. The method of any one of items 1-8, further comprising:
   in conjunction with terminating the extension of the application, erasing memory allocated for the extension of the application.
10. The method of any one of items 1-9, further comprising:
   after detecting the request to use the extension of the application, while the extension of the application is active, after the predefined period of time of the extension being active, and in accordance with the determination that the first set of one or more criteria is not satisfied, detecting a request to terminate the extension of the application; and
   in response to detecting the request to terminate the extension of the application, terminating the extension of the application.
11. The method of item 10, further comprising:
   in conjunction with terminating the extension of the application in response to detecting the request to terminate the extension of the application, erasing memory allocated for the extension of the application.
12. The method of any one of items 1-11, wherein the device is in communication with a display generation component, the method further comprising:
   in response to detecting the request to use the extension of the application, launching the extension of the application; and
   in conjunction with launching the extension of the application, displaying, via the display generation component, a user interface of the extension of the application.
13. The method of any one of items 1-12, wherein the device is in communication with a display generation component, the method further comprising:
   after detecting the request to use the extension of the application and before the predefined period of time of the extension being active has expired, displaying, via the display generation component, a user interface of the operating system, wherein display of the user interface corresponds to activating the operating system function.
14. The method of any one of items 1-13, further comprising:
   after the extension is no longer executing and while the application is executing, receiving a request for one or more paths previously provided to the extension of the application; and
   in response to receiving the request for one or more paths previously provided to the extension of the application, providing a first set of one or more paths.
15. The method of any one of items 1-14, further comprising:
   after the extension is no longer executing and while the application is executing, receiving a request to invalidate a path; and
   in response to receiving the request to invalidate the path, invalidating the path, wherein invalidating the path includes removing the path from a set of one or more paths available to be provided in response to a request for one or more paths.
16. A non-transitory computer-readable medium storing one or more programs configured to be executed by one or more processors of a device executing a system process, the one or more programs including instructions for performing the method of any one of items 1-15.
17. A device executing a system process, the device comprising:
   one or more processors; and
   memory storing one or more programs configured to be executed by the one or more processors, the one or more programs including instructions for performing the method of any one of items 1-15.
18. A device executing a system process, the device comprising:
   means for performing the method of any one of items 1-15.
19. A computer program product, comprising one or more programs configured to be executed by one or more processors of a device executing a system process, the one or more programs including instructions for performing the method of any one of items 1-15.
20. A non-transitory computer-readable storage medium storing one or more programs configured to be executed by one or more processors of a device executing a system process, the one or more programs including instructions for:
   detecting a request to use an extension of an application; and
   after detecting the request to use the extension of the application:
      in accordance with a determination that a first set of one or more criteria is satisfied, wherein the first set of one or more criteria includes a criterion that is satisfied when the extension of the application does not activate an operating system function within a predefined period of time of the extension being active, terminating the extension of the application; and
      in accordance with a determination that the first set of one or more criteria is not satisfied, forgoing termination of the extension of the application.
21. A device executing a system process, the device comprising:
   one or more processors; and
   memory storing one or more programs configured to be executed by the one or more processors, the one or more programs including instructions for:
      detecting a request to use an extension of an application; and
      after detecting the request to use the extension of the application:
         in accordance with a determination that a first set of one or more criteria is satisfied, wherein the first set of one or more criteria includes a criterion that is satisfied when the extension of the application does not activate an operating system function within a predefined period of time of the extension being active, terminating the extension of the application; and
         in accordance with a determination that the first set of one or more criteria is not satisfied, forgoing termination of the extension of the application.
22. A device executing a system process, the device comprising:
   means for detecting a request to use an extension of an application; and
   after detecting the request to use the extension of the application:
      means for, in accordance with a determination that a first set of one or more criteria is satisfied, wherein the first set of one or more criteria includes a criterion that is satisfied when the extension of the application does not activate an operating system function within a predefined period of time of the extension being active, terminating the extension of the application; and
      means for, in accordance with a determination that the first set of one or more criteria is not satisfied, forgoing termination of the extension of the application.
23. A computer program product, comprising one or more programs configured to be executed by one or more processors of a device executing a system process, the one or more programs including instructions for:
   detecting a request to use an extension of an application; and
   after detecting the request to use the extension of the application:
      in accordance with a determination that a first set of one or more criteria is satisfied, wherein the first set of one or more criteria includes a criterion that is satisfied when the extension of the application does not activate an operating system function within a predefined period of time of the extension being active, terminating the extension of the application; and
      in accordance with a determination that the first set of one or more criteria is not satisfied, forgoing termination of the extension of the application.
24. A method, comprising:
   at a system process of a device:
   detecting a first request to use an extension of an application;
   in response to detecting the first request, sending a first path to the extension of the application;
   after sending the first path, detecting a second request, different from the first request, to use the extension of the application; and
   in response to detecting the second request, sending a second path, different from the first path, to the extension of the application.
25. The method of item 24, further comprising:
   in conjunction with detecting the first request, generating the first path; and
   in conjunction with detecting the second request, generating the second file path.
26. The method of any one of items 24-25, wherein the first path corresponds to a first location within a container of the application, and wherein the second path corresponds to a second location, different from the first location, within the container of the application.
27. The method of any one of items 24-26, wherein the first path corresponds to a first location outside of a container of the extension of the application, and wherein the second path corresponds to a second location, different from the first location, outside of the container of the extension of the application.
28. The method of item 27, further comprising:
   in response to detecting the first request, executing the extension of the application; and
   while the extension of the application is executing in response to detecting the first request, restricting the extension of the application from accessing memory outside of the container of the extension and the first path.
29. The method of any one of items 24-28, wherein the device is locked while the first request is detected and while the first path is sent to the extension of the application, the method further comprising:
   in response to detecting the first request, launching the extension of the application while the device remains locked.
30. The method of item 29, further comprising:
   while the device is unlocked:
   detecting a third request to use the extension of the application; and
   in response to detecting the fourth request, launching the extension of the application without providing a path to the extension of the application.
31. The method of any one of items 29-30, further comprising:
   after launching the extension of the application while the device is locked:
      receiving, from the extension of the application, a request to authenticate a user; and
      in response to receiving the request to authenticate the user, initiating a process to authenticate the user; and
   in response to authenticating the user, unlocking the device.
32. The method of any one of items 24-31, wherein the application is a first application, and wherein the first request to use the extension of the application is detected while a second application, different from the first application, is a foreground application of the device.
33. The method of any one of items 24-32, further comprising:
   after sending the first path, terminating the extension of the application; and
   in conjunction with terminating the extension of the application, erasing memory allocated for the extension of the application.
34. The method of any one of items 24-33, wherein the device is in communication with a display generation component, the method further comprising:
   in response to detecting the request to use the extension of the application, launching the extension of the application; and
   in conjunction with launching the extension of the application, displaying, via the display generation component, a user interface of the extension of the application.
35. The method of any one of items 24-34, wherein the device is in communication with a display generation component, the method further comprising:
   in response to detecting the request to use the extension of the application, launching the extension of the application; and
   in conjunction with launching the extension of the application, displaying, via the display generation component, a user interface of the operating system.
36. The method of any one of items 24-35, wherein the extension stores data using the first path after the system process sends the first path and before the system process detects the second request.
37. The method of any one of items 24-36, wherein the extension stores data using a container of the extension after the system process sends the first path and before the system process detects the second request, and wherein the container of the extension is separate from the first path.
38. The method of any one of items 24-37, wherein the application is a first application, and wherein the first path corresponds to the first application, the method further comprising:
   detecting a request to use an extension of a second application different from the first application; and
   in response to detecting the request to use the extension of the second application, sending a third path, different from the first path and the second path, to the extension of the second application, wherein the third path corresponds to the second application.
39. The method of any one of items 24-38, further comprising:
   after detecting the second request and while the extension of the application is executing in response to detecting the second request, restricting the extension of the application from accessing memory outside of a container of the extension and the second path.
40. The method of any one of items 24-39, further comprising:
   after the extension is no longer executing and while the application is executing, receiving a request for one or more paths previously provided to the extension of the application; and
   in response to receiving the request for one or more paths previously provided to the extension of the application, providing a first set of one or more paths.
41. The method of any one of items 24-40, further comprising:
   after the extension is no longer executing and while the application is executing, receiving a request to invalidate a path; and
   in response to receiving the request to invalidate the path, invalidating the path, wherein invalidating the path includes removing the path from a set of one or more paths available to be provided in response to a request for one or more paths.
42. A non-transitory computer-readable medium storing one or more programs configured to be executed by one or more processors of a device executing a system process, the one or more programs including instructions for performing the method of any one of items 24-41.
43. A device executing a system process, the device comprising:
   one or more processors; and
   memory storing one or more programs configured to be executed by the one or more processors, the one or more programs including instructions for performing the method of any one of items 24-41.
44. A device executing a system process, the device comprising:
   means for performing the method of any one of items 24-41.
45. A computer program product, comprising one or more programs configured to be executed by one or more processors of a device executing a system process, the one or more programs including instructions for performing the method of any one of items 24-41.
46. A non-transitory computer-readable storage medium storing one or more programs configured to be executed by one or more processors of a device executing a system process, the one or more programs including instructions for:
   detecting a first request to use an extension of an application;
   in response to detecting the first request, sending a first path to the extension of the application;
   after sending the first path, detecting a second request, different from the first request, to use the extension of the application; and
   in response to detecting the second request, sending a second path, different from the first path, to the extension of the application.
47. A device executing a system process, the device comprising:
   one or more processors; and
   memory storing one or more programs configured to be executed by the one or more processors, the one or more programs including instructions for:
      detecting a first request to use an extension of an application;
      in response to detecting the first request, sending a first path to the extension of the application;
      after sending the first path, detecting a second request, different from the first request, to use the extension of the application; and
      in response to detecting the second request, sending a second path, different from the first path, to the extension of the application.
48. A device executing a system process, the device comprising:
   means for detecting a first request to use an extension of an application;
   means for, in response to detecting the first request, sending a first path to the extension of the application;
   means for, after sending the first path, detecting a second request, different from the first request, to use the extension of the application; and
   means for, in response to detecting the second request, sending a second path, different from the first path, to the extension of the application.
49. A computer program product, comprising one or more programs configured to be executed by one or more processors of a device executing a system process, the one or more programs including instructions for:
   detecting a first request to use an extension of an application;
   in response to detecting the first request, sending a first path to the extension of the application;
   after sending the first path, detecting a second request, different from the first request, to use the extension of the application; and
   in response to detecting the second request, sending a second path, different from the first path, to the extension of the application.
50. A method, comprising:
   at an application of a device:
   while the application is active, sending, to a system process, a request for one or more paths previously provided to an extension of the application;
   after sending the request for one or more paths previously provided to the extension of the application, receiving, from the system process, a first set of one or more paths previously provided to the extension of the application; and
   after receiving the first set of one or more paths previously provided to the extension of the application, obtaining first content at a first path of the first set of one or more paths.
51. The method of item 50, wherein the request for one or more paths provided to the extension of the application is a first request, the method further comprising:
   while the application is active, sending, to the system process, a second request, separate from the first request, for one or more paths previously provided to the extension of the application; and
   after sending the second request for one or more paths previously provided to the extension of the application, receiving, from the system process, the first set of one or more paths previously provided to the extension of the application.
52. The method of item 50, further comprising:
   while the application is active, sending, to the system process, a third request, separate from the first request, for one or more paths previously provided to the extension of the application; and
   after sending the third request for one or more paths previously provided to the extension of the application, receiving, from the system process, a second set of one or more paths, different from the first set of one or more paths, previously provided to the extension of the application.
53. The method of any one of items 50-52, further comprising:
   sending, to the system process, a request to invalidate a second path of the first set of one or more paths;
   after sending the request to invalidate the second path of the first set of one or more paths, sending, to the system process, a fourth request, separate from the first request, for one or more paths previously provided to the extension of the application; and
   after sending the fourth request, receiving, from the system process, a third set of one or more paths that does not include the second path.
54. The method of any one of items 50-53, further comprising:
   at the extension of the application:
   in conjunction with being launched, receiving, from the system process, a third path of the first set of one or more paths.
55. The method of item 54, wherein the extension of the application is restricted from accessing a location within a container of the application except for the third path in conjunction with receiving the third path.
56. The method of any one of items 54-55, wherein the third path is generated in conjunction with launching the extension of the application.
57. The method of any one of items 54-56, wherein the third path is received while the device is locked.
58. The method of any one of items 50-57, further comprising:
   at the extension of the application:
   while the extension of the application is active, storing data using the third path of the first set of one or more paths.
59. The method of item 58, further comprising:
   while the application of the device is active, accessing the data stored using the third path of the first set of one or more paths.
60. The method of any one of items 50-59, further comprising:
   at the extension of the application:
   while the device is locked, sending, via an Application Programming Interface (API), a request to authenticate a user;
   after sending the request to authenticate the user, receiving an indication that the device is unlocked; and
   after receiving the indication that the device is unlocked, performing an operation that is not accessible while the device is locked.
61. The method of item 60, wherein the request for one or more paths previously provided to the extension of the application is sent after receiving the indication that the device is unlocked.
62. The method of item 61, further comprising:
   after obtaining the first content, storing at least a portion of the first content at a location remote from the device.
63. A non-transitory computer-readable medium storing one or more programs configured to be executed by one or more processors a device executing an application, the one or more programs including instructions for performing the method of any one of items 50-62.
64. A device executing an application, the device comprising:
   one or more processors; and
   memory storing one or more programs configured to be executed by the one or more processors, the one or more programs including instructions for performing the method of any one of items 50-62.
65. A device executing an application, the device comprising:
   means for performing the method of any one of items 50-62.
66. A computer program product, comprising one or more programs configured to be executed by one or more processors of a device executing an application, the one or more programs including instructions for performing the method of any one of items 50-62.
67. A non-transitory computer-readable storage medium storing one or more programs configured to be executed by one or more processors of a device executing an application, the one or more programs including instructions for:
   while the application is active, sending, to a system process, a request for one or more paths previously provided to an extension of the application;
   after sending the request for one or more paths previously provided to the extension of the application, receiving, from the system process, a first set of one or more paths previously provided to the extension of the application; and
   after receiving the first set of one or more paths previously provided to the extension of the application, obtaining first content at a first path of the first set of one or more paths.
68. A device executing an application, the device comprising:
   one or more processors; and
   memory storing one or more programs configured to be executed by the one or more processors, the one or more programs including instructions for:
      while the application is active, sending, to a system process, a request for one or more paths previously provided to an extension of the application;
      after sending the request for one or more paths previously provided to the extension of the application, receiving, from the system process, a first set of one or more paths previously provided to the extension of the application; and
      after receiving the first set of one or more paths previously provided to the extension of the application, obtaining first content at a first path of the first set of one or more paths.
69. A device executing an application, the device comprising:
   means for, while the application is active, sending, to a system process, a request for one or more paths previously provided to an extension of the application;
   means for, after sending the request for one or more paths previously provided to the extension of the application, receiving, from the system process, a first set of one or more paths previously provided to the extension of the application; and
   means for, after receiving the first set of one or more paths previously provided to the extension of the application, obtaining first content at a first path of the first set of one or more paths.
70. A computer program product, comprising one or more programs configured to be executed by one or more processors of a device executing an application, the one or more programs including instructions for:
   while the application is active, sending, to a system process, a request for one or more paths previously provided to an extension of the application;
   after sending the request for one or more paths previously provided to the extension of the application, receiving, from the system process, a first set of one or more paths previously provided to the extension of the application; and
   after receiving the first set of one or more paths previously provided to the extension of the application, obtaining first content at a first path of the first set of one or more paths.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A method, comprising:
at an application of a device:
while the application is active, sending, to a system process, a request for one or more paths previously provided to an extension of the application;
after sending the request for one or more paths previously provided to the extension of the application, receiving, from the system process, a first set of one or more paths previously provided to the extension of the application; and
after receiving the first set of one or more paths previously provided to the extension of the application, obtaining first content at a first path of the first set of one or more paths.

2. The method of claim 1, wherein the request for one or more paths provided to the extension of the application is a first request, the method further comprising:
while the application is active, sending, to the system process, a second request, separate from the first request, for one or more paths previously provided to the extension of the application; and
after sending the second request for one or more paths previously provided to the extension of the application, receiving, from the system process, the first set of one or more paths previously provided to the extension of the application.

3. The method of claim 1, further comprising:
while the application is active, sending, to the system process, a third request, separate from the first request, for one or more paths previously provided to the extension of the application; and
after sending the third request for one or more paths previously provided to the extension of the application, receiving, from the system process, a second set of one or more paths, different from the first set of one or more paths, previously provided to the extension of the application.

4. The method of any one of claims 1-3, further comprising:
sending, to the system process, a request to invalidate a second path of the first set of one or more paths;
after sending the request to invalidate the second path of the first set of one or more paths, sending, to the system process, a fourth request, separate from the first request, for one or more paths previously provided to the extension of the application; and
after sending the fourth request, receiving, from the system process, a third set of one or more paths that does not include the second path.

5. The method of any one of claims 1-4, further comprising:
at the extension of the application:
in conjunction with being launched, receiving, from the system process, a third path of the first set of one or more paths.

6. The method of claim 5, wherein the extension of the application is restricted from accessing a location within a container of the application except for the third path in conjunction with receiving the third path.

7. The method of any one of claims 5-6, wherein the third path is generated in conjunction with launching the extension of the application.

8. The method of any one of claims 5-7, wherein the third path is received while the device is locked.

9. The method of any one of claims 1-8, further comprising:
at the extension of the application:
while the extension of the application is active, storing data using the third path of the first set of one or more paths.

10. The method of claim 9, further comprising:
while the application of the device is active, accessing the data stored using the third path of the first set of one or more paths.

11. The method of any one of claims 1-10, further comprising:
at the extension of the application:
while the device is locked, sending, via an Application Programming Interface (API), a request to authenticate a user;
after sending the request to authenticate the user, receiving an indication that the device is unlocked; and
after receiving the indication that the device is unlocked, performing an operation that is not accessible while the device is locked.

12. The method of claim 11, wherein the request for one or more paths previously provided to the extension of the application is sent after receiving the indication that the device is unlocked.

13. The method of claim 12, further comprising:
after obtaining the first content, storing at least a portion of the first content at a location remote from the device.

14. A non-transitory computer-readable storage medium storing one or more programs configured to be executed by one or more processors of a device executing an application, the one or more programs including instructions for performing the method of any one of claims 1-13.

15. A device executing an application, the device comprising:
one or more processors; and
memory storing one or more programs configured to be executed by the one or more processors, the one or more programs including instructions for performing the method of any one of claims 1-13.
